(19) Europäisches Patentamt
European Patent Office
Office européen des brevets

(11) **EP 2 868 187 A1**

(12) **EUROPEAN PATENT APPLICATION**
published in accordance with Art. 153(4) EPC

(43) Date of publication:
**06.05.2015 Bulletin 2015/19**

(51) Int Cl.:
***A01G 1/00*** (2006.01)

(21) Application number: **13808810.9**

(22) Date of filing: **26.06.2013**

(86) International application number:
**PCT/JP2013/067462**

(87) International publication number:
**WO 2014/003040 (03.01.2014 Gazette 2014/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **29.06.2012 JP 2012147354
25.09.2012 JP 2012211219
25.09.2012 JP 2012211224**

(71) Applicant: **Toyo Tire & Rubber Co., Ltd.
Osaka-shi, Osaka 550-8661 (JP)**

(72) Inventor: **ISHIZAKA, Nobuyoshi
Osaka-shi
Osaka 550-8661 (JP)**

(74) Representative: **Eisenführ Speiser
Patentanwälte Rechtsanwälte PartGmbB
Postfach 10 60 78
28060 Bremen (DE)**

(54) **ARTIFICIAL SOILS AND PROCESS FOR PRODUCING SAME**

(57) The present invention provides as alternatives to natural soil (1) a plant growable artificial soil only by supplying water (such as tap-water), which has excellent fertilizer retainability by comprising a granulated material of fertilizer retainable fillers, and a method of making the artificial soil; (2) an artificial soil, which only specified fertilizer components are adsorbed by using a material having high fertilizer retainability; and (3) a granulated plant growing material having excellent fertilizer retainability so as to have both high cation exchange capacity and anion exchange capacity, excellent water retaining capacity with respect to water, which can be easily absorbed by the plants, and excellent breathability so as to return to high breathable state in a short time even if retaining water until reaching a saturated state.

EP 2 868 187 A1

**EP 2 868 187 A1**

**Description**

**FIELD OF THE INVENTION**

The present invention relates to an artificial soil and a method of making the artificial soil, and a granulated plant growing material for the artificial soil. Particularly, the present invention relates to an artificial soil, which plant can grow only by supplying water, such as tap-water, and a method of making the artificial soil; a cation-based or anion-based fertilizer component supported artificial soil; and a granulated plant growing material for an artificial soil, which is formed by containing a cation exchange filler and an anion exchange filler in granulated gel formed from alginate and polyvalent metal ion and has excellent fertilizer retainability, excellent water retaining capacity and excellent breathability.

**BACKGROUND OF THE INVENTION**

In recent years, various artificial soils have been commercialized because of the soaring vegetable prices and the boom in home vegetable gardens, but they have large quality variation because the most thereof use the natural materials, particularly in natural organic materials such as peat moss, it is difficult to obtain a material having good quality due to the problem of resource depletion and environmental destruction.

As described above, peat moss has been suitably used from the viewpoint of light weight due to porous cellular structure, excellent breathability and water retaining capacity, excellent fertilizer retainability due to high cation exchange capacity and low price as one of the artificial soil materials, which can be used instead of the natural soil. Although peat moss has excellent water retaining capacity due to porous cellular structure, it has strong water repellency when it is completely dried, and there is a problem that it is difficult to retain water even if adding water again thereto. In addition, there is a problem to retain excess water when a large amount of water is supplied in order to prevent peat moss from drying, and the breathability is poor, which causes root rot and disease.

In order to solve such a problem, many alternatives to the natural soil, such as an alginate gel and porous inorganic material, have been proposed.

JP 6-209662 A (Patent Document 1) discloses an artificial soil for sterile plants used for growing plant seeds or the regenerated tissue under sterile environment, wherein the artificial soil is formed into a granular or string-shaped molded body with a gelled support material and the molded bodies are assembled. A granular gel is formed by using, for example, an alginic acid salt as the gelled support material to ensure at the same time water retaining capacity and breathability. However, since the granular gel is only formed by ionically cross-linking the alginic acid salt in the artificial soil of Patent Document 1, sufficient fertilizer retainability cannot be obtained.

JP 2002-80284 A discloses an inorganic porous material having a cation exchange capacity of 50 to 400 (cmol/kg) and a median size of pore distribution of 0.01 to 15.00 ($\mu$m), wherein zeolite is formed in the outer peripheral portion. However, it is difficult for the plant to absorb water because the pore size of the inorganic porous material is small, which is 15 $\mu$m or less. In addition, it is presumed that the anion exchange capacity is low, because the cation exchange capacity is specified, but the anion exchange material is not used. Furthermore, there is a problem that firing at elevated temperature (800°C) is necessary during manufacturing and toxic metals and harmful chemicals are contained in trace amount, because waste casting sand, which is discharged as dust waste from the dust collector of the foundry, is used as a raw material.

JP 11-70384 A discloses a bead-type alginate gel water treatment agent produced by dropping 0.1 to 10% by mass of the alginate solution to the multivalent cation solution to crosslink the alginate. However, since the ion adsorbent is not contained, there is a problem that the cation adsorption capacity and anion adsorption capacity are low.

In addition, there are various commercial available fertilizers. Since they are easily collapsed with water in general and the concentration of fertilizer component eluted is high, it is difficult for plants to absorb them. There is also a fertilizer having a controlled collapse such that the fertilizer components are slowly discharged, but it will take some time before the fertilization effect is obtained in the case. Furthermore, in the case of using commercially available fertilizers, when specific fertilizer components such as potassium and phosphorus are only insufficient, only the insufficient components cannot be spread because they contain all the components required as a fertilizer, and the fertilizer containing unnecessary components can be only spread.

In the fertilizer in prior arts described above (Patent Documents 1 to 3), there is no fertilizer only containing the specific components of the fertilizer, and it is necessary to use the fertilizer containing all components even if one component in the fertilizer is insufficient.

**2**

PRIOR ART

Patent Documents

Patent Document 1: JP 06-209662 A
Patent Document 2: JP 2002-80284 A
Patent Document 3: JP 11-70384 A

## OBJECTS OF THE INVENTION

The objects of the present invention are to provide:

(1) a plant growable artificial soil only by supplying water (such as tap-water) having excellent fertilizer retainability by supporting a fertilizer component after granulating a material having high fertilizer retainability, and a method of making the artificial soil;
(2) an artificial soil, which only specific fertilizer components are adsorbed by using a material having high fertilizer retainability; and
(3) a granulated plant growing material having excellent fertilizer retainability so as to have both high cation exchange capacity and anion exchange capacity, excellent water retaining capacity with respect to water, which can be easily absorbed by the plant and excellent breathability so as to return to high breathable state in a short time even if retaining water until reaching a saturated state.

The present inventors have found that:

(1) a plant growable artificial soil only by supplying water comprising a granulated material of fertilizer retainable fillers, wherein the granulated material supports a fertilizer component and has a particle size of 0.2 to 6 mm;
(2) a cation-based fertilizer component supported artificial soil, wherein at least one cation necessary for growth of a plant is adsorbed on a granulated cation adsorbent and an anion-based fertilizer component supported artificial soil, wherein at least one anion necessary for growth of a plant is adsorbed on a granulated anion adsorbent;
(3) a granulated plant growing material formed from alginate gel containing a cation exchange filler and an anion exchange filler, which has excellent fertilizer retainability, excellent water retaining capacity and excellent breathability by adjusting the particle size, cation exchange capacity and anion exchange capacity to the specified ranges;

can be provided, and thereby the present invention has been accomplished.

## SUMMARY OF THE INVENTION

(1) The present invention relates to a plant growable artificial soil only by supplying water comprising a granulated material of fertilizer retainable fillers, wherein the granulated material supports a fertilizer component and has a particle size of 0.2 to 6 mm.
The present invention relates to a method of making a plant growable artificial soil only by supplying water comprising the steps of:

granulating fertilizer retainable fillers to form a granulated material having a particle size of 0.2 to 6 mm; and
supporting a fertilizer component on the granulated material.

The present invention relates to a method of making a plant growable artificial soil only by supplying water comprising the steps of:

granulating fertilizer retainable fillers and porous water retainable fillers to form a granulated material having a particle size of 0.2 to 6 mm; and
supporting a fertilizer component on the granulated material.

With respect to the artificial soil, in order to put the present invention into a more suitable practical application, it is desired that:

the granulated material is porous and has an adsorption ability of a cation and anion having a cation exchange capacity of not less than 5 meq/100 cc and an anion exchange capacity of not less than 5 meq/100 cc; and the artificial soil further comprises a granulated material of water retainable fillers, the granulated material of water retainable fillers is porous and has a particle size of 0.2 to 6 mm.

In addition, with respect to a method of making the artificial soil, in order to put the present invention into a more suitable practical application, it is desired that:

the step of granulating is conducted such that the granulated material is porous;
it comprises the steps of:

granulating water retainable fillers to form a porous granulated material having a particle size of 0.2 to 6 mm; and
mixing the granulated material of the water retainable fillers with the granulated material of fertilizer retainable fillers.

(2) The present invention relates to a cation-based fertilizer component supported artificial soil, wherein at least one cation necessary for growth of a plant is adsorbed on a granulated cation adsorbent.

In addition the present invention relates to an anion-based fertilizer component supported artificial soil, wherein at least one anion necessary for growth of a plant is adsorbed on a granulated anion adsorbent.

Furthermore, the present invention relates to a fertilizer component supported artificial soil comprising the cation-based fertilizer component supported artificial soil and the anion-based fertilizer component supported artificial soil.

With respect to the cation-based or anion-based fertilizer component supported artificial soil, in order to put the present invention into a more suitable practical application, it is desired that:

a plant can easily absorb a cation or anion by plant (root) acids;
the cation adsorbent is selected from the group consisting of zeolite, smectite, mica, vermiculite, talc, cation exchange resins, humus and mixtures thereof;
the cation is selected from the group consisting of $K^+$, $Ca^{2+}$, $Mg^{2+}$, $Fe^{2+}$, $Mn^{2+}$, $Zn^{2+}$, $Ni^{2+}$, $Cu^{2+}$, $Mo^{2+}$ and mixtures thereof;
the cation is $K^+$;
the anion adsorbent is selected from the group consisting of double hydroxide and double hydroxides, allophane, imogolite, kaolin, anion exchange resins and mixtures thereof;
the anion is selected from the group consisting of $NO_3^-$, $PO_4^{3-}$, $SO_4^{2-}$, $Cl^-$ and mixtures thereof; and
the anion is selected from the group consisting of $NO_3^-$, $PO_4^{3-}$ and mixtures thereof.

(3) The present invention relates to a granulated plant growing material for an artificial soil formed from alginate gel, wherein the granulated plant growing material has a particle size of 0.2 to 6 mm, a cation exchange capacity of not less than 5 meq/100 mL and an anion exchange capacity of not less than 5 meq/100 mL.

In order to put the present invention into a more suitable practical application, it is desired that:

a water retaining capacity at pF of 1.7 to 2.7 is within the range of 5 to 50 mL per 100 mL of the granulated plant growing material;
the water retaining capacity is accomplished by the combination with porous particulates having a continuous pore structure;
the water retaining capacity is accomplished by forming the granulated plant growing material itself into a porous granulated plant growing material;
the formation of the porous granulated plant growing material is accomplished by vacuum freeze drying when preparing the granulated plant growing material or by formulating a hydrophilic surfactant to give rise to a gelation after foaming when preparing the granulated plant growing material;
the granulated plant growing material comprises a cation exchange filler and an anion exchange filler;
the cation exchange filler is selected from the group consisting of zeolite, smectite-based mineral, mica-based mineral, cation exchange resins and humus; and the anion exchange filler is selected from the group consisting of hydrotalcite, manasseite, pyroaurite, sjogrenite, copper rust, allophane, imogolite, kaolin and anion exchange resins; and

the porous particulates having a continuous pore structure are selected from the group consisting of a foam glass and polymer porous medium.

## EFFECTS OF THE INVENTION

According to the present invention:

(1) (i) Soil conventionally used does not necessarily contain many fertilizer components, and it is necessary to add a fertilizer component later. However, in the artificial soil of the present invention, it is not necessary to spread fertilizer because the fertilizer component is supported in the artificial soil in advance.

(ii) Since soil conventionally used has poor fertilizer retaining capability, if a large amount of fertilizer is introduced, it is possible to only retain a part of the fertilizer in the soil, and most of the fertilizer runs off. On the other hand, since the artificial soil of the present invention has excellent fertilizer retaining capability, if a sufficient fertilizer component is retained in advance, there is almost no need to add fertilizer.

(iii) Artificial soil cannot convert $NH_4^+$ ions as a nitrogen source into $NO_3^-$ ions, which many plants easily absorb, because there is no nitrifying bacteria present in the natural soil. However, the artificial soil of the present invention can adsorb the $NO_3^-$ ions as anions.

(iv) In the artificial soil of the present invention, $K^+$, $NO_3^-$ and the like as fertilizer components, which the artificial soil adsorbs, are eluted by root acid and the like distributed from the roots and dissolved in water to be absorbed from plant roots, and thereby the plant can be grown. Since the fertilizer components are eluted only when secreting root acid in the case that the plants need nutrients, there is no problem that fertilizer spoilage arises from an excessive ion concentration in the artificial soil and a lack of nutrients arises from an insufficient ion concentration.

(v) Since the artificial soil itself has fertilizer retainability, it is possible to release fertilizer components in the long term without the runoff of the fertilizer components in the granulated material by the supply of water, such as irrigation.

(2) Since the natural soil has poor fertilizer retaining capability, if a large amount of inorganic fertilizer is mixed, most of the fertilizer runs off by rain and the like, and it is necessary to mix it as a slow-released fertilizer or an organic fertilizer. There is a problem that the expression of fertilizer effect is delayed by using the above fertilizer. In addition, since detailed components contained in organic fertilizers such as compost is not clear, it is difficult to only add an insufficient fertilizer component in a required amount. There is a problem that a part of the fertilizer components is insufficient if adding the fertilizer or, on the other hand, the specific fertilizer component is excess.

Since chemical fertilizers commercially available also contain components of nitrogen (N), phosphorus (P) and potassium (K) and a fertilizer of neutral salt type among a single fertilizer contains both of cation and anion, such as KCl, $MgSO_4$ and Ca $(NO_3)_2$, it is difficult to add a fertilizer component alone, for example, only the cation or only the anion to the soil.

In addition, there is a fertilizer formulation suitable for vegetables and the like, but the insufficient fertilizer component cannot be compensated by the grower, because the suitability for vegetables requested for the grower and the components contained therein are not clear in a general-purpose soil or culture soil, and the cultivation is not conducted in a thoughtful way.

(i) On the other hand, since the artificial soil of the present invention is the artificial soil for one fertilizer component, such as only potassium, only phosphate, only nitrogen alone, the user is free to change the composition and the mixing ratio of the fertilizer, and it is possible to fertilize the existent soil at a pinpoint. In addition, it is also possible to form a fertilizer formulation suitable for vegetables at a pinpoint.

(ii) It is possible to further combine the component having excellent water retaining capacity or the component having excellent drainage capacity, and the user is free to design chemical properties, such as fertilizer component and physical properties, such as fertilizer retaining capacity, breathability. Thereby, it is possible to design a soil suitable for objective vegetables.

(iii) In addition, the effects of the (1-iv) and (1-v) can be also obtained.

(3) It is possible to provide a granulated plant growing material having excellent fertilizer retainability so as to have both high cation exchange capacity and anion exchange capacity, excellent water retaining capacity with respect to water, which can be easily absorbed by the plant and excellent breathability so as to return to high breathable state in a short time even if retaining water until reaching a saturated state by adjusting the particle size, cation exchange capacity and anion exchange capacity to the specified ranges in a granulated plant growing material containing a cation exchange filler and an anion exchange filler in granulated alginate gel.

## DETAILED DESCRIPTION OF THE PREFERRED EMBODIMENTS

[Granulated plant growing material for artificial soil]

Cations such as $K^+$, $Ca^{2+}$, $Mg^{2+}$ and the like are necessary for the growth of plants. If the plants have no ability to retain such nutrients, the nutrients initially fed, for example, from a chemical fertilizer flow down together with water, and the plants cannot utilize them. The natural soil has an adsorption capacity thereof, but it is necessary to artificially add the adsorption capacity in the case of using a polymeric material. In addition, nitrogen is an essential element for the growth of plants, but there is a type of the soil which cannot be absorbed as an ammonium nitrogen as a cation and can be absorbed only as nitrate nitrogen as an anion, and the anion adsorption capacity is also required in addition to the cation adsorption capacity. In the soil, since the ammonium nitrogen adsorbed on the cation exchanger as the $NH_4^+$ also can be converted into $NO_3^-$ by microorganisms such as nitrifying bacteria in the soil, it may have low anion adsorption capacity. However, in the artificial soil without the nitrifying bacteria, it is necessary to have high anion adsorption capacity in order to directly adsorb the $NO_3^-$.

The soil water exists surrounding the surface of the soil particles and continuously exists from a hygroscopic water that is present in the innermost of the soil particle to a gravity water which is present in the outermost of the soil particle. The difference in the state of the soil water is due to the difference in the adsorption force, and there are hygroscopic water, capillary water and gravity water in descending order of the adsorption force. A pF value means a force (suction pressure) to separate the water adsorbed on the soil, which is displayed in the height of the water column, and concretely is represented by the following formula:

$$pF = \log h$$

that is, the pF value is a common logarithm of a suction pressure "h (cm)" of the soil water, which is displayed in the height of the water column. When the height of the water column is 1 cm, the force corresponds to 98.07 Pa. For example, pF 2.0 represents the moisture state adsorbed by a force corresponding to the pressure of the water column having a height of 100 ($10^2$) cm. Furthermore, pF 0 represents the state filled with water and without air in the pores in the soil, and pF 7 represents the hot dry state at 100°C that there is only the water combined with the soil.

The moisture that can be absorbed from root of plants means from the moisture (usually, pF 1.7) remaining in the soil typically 24 hours after rainfall or irrigation, which the downward movement of water by gravity is very small, to the moisture (pF 3.8) at a wilting point, which the plant begins to wilt. Therefore, when the pF value is smaller than 1.7, air in the soil is insufficient, and the plants are subjected to moisture damage. On the other hand, when the pF value is larger than 3.8, the plants cannot absorb the moisture, and the plants are blighted.

Furthermore, among the moisture that can be absorbed from root of plants, the moisture having a pF value of 1.7 to 2.7 is called as easily effective available water, and the plants can easily absorb the moisture readily, by which the growth of the plants is improved. The moisture having a pF value other than it is called as difficultly available water, it is difficult for the plants to absorb the moisture, by which the plants are not blighted, but the growth of the plants declines. As described above, the plants can easily absorb the moisture at a pF of 1.7 to 2.7 in general. Therefore, in the present invention, the volume water content per 100 mL of a plant growing material is used as a water retaining capacity at a pF of 1.7 to 2.7.

As the water retaining capacity, the pore size and porosity of the plant growing material are not simply specified, and the retaining amount of the moisture, which can be easily absorbed from root of the plants, is adjusted to a specified range. For example, even if the pore size and porosity of the plant growing material are specified, when the plant growing material contains the moisture drained by gravity, difficultly available water, which it is difficult for the plants to absorb and the moisture combined with the soil, the moisture, which is available by the plants, is insufficient, and the water retaining capacity of the plant growing material is in sufficient. Therefore, it is desired in the present invention that a water retaining capacity at pF of 1.7 to 2.7, which is the retaining amount of the moisture actually available by the plants, is within the range of 5 to 50 mL, preferably 7 to 40 mL, more preferably 10 to 40 mL per 100 mL of the granulated plant growing material. When the water retaining capacity is less than 5 mL, it is difficult to retain the moisture, which can be easily absorbed by the plants over a long period of time. On the other hand, when the water retaining capacity is more than 50 mL, the breathability in the water-retaining state is reduced, and the plants are difficultly grown.

The granulated plant growing material for an artificial soil of the present invention is required to contain a cation exchange filler and an anion exchange filler in granulated alginate gel formed from polyvalent metal ion and alginate.

A method of making the granulated plant growing material for an artificial soil comprises the steps of:

(a) mixing the cation exchange filler and anion exchange filler with an aqueous solution of the alginate and agitating it to form a liquid mixture,
(b) dropping the resulting liquid mixture in an aqueous solution of the polyvalent metal ion to form a gelation particle, and
(c) washing the resulting gelation particle with water and drying it.

Examples of the cation exchange fillers used for the granulated plant growing material of the present invention include zeolite, smectite-based mineral such as montmorillonite, mica-based mineral, vermiculite, humus, cation exchange resins and the like; and examples of the cation exchange resins include a weak acid cation exchange resin, a strong acid cation exchange resin and the like.

It is desired that the amount of the cation exchange filler is within the range of 2 to 40 parts by mass, preferably 5 to 40 parts by mass, more preferably 5 to 30 parts by mass, based on 100 parts by mass of the aqueous solution of the alginate. When the amount of the cation exchange filler is smaller than 2 parts by mass, sufficient ion exchangeability cannot be shown. On the other hand, when the amount of the cation exchange filler is larger than 40 parts by mass, it is difficult to form the granulated alginate gel.

Examples of the anion exchange fillers used for the granulated plant growing material of the present invention include natural layered double hydroxides having a double hydroxide as a main backbone such as hydrotalcite, manasseite, pyroaurite, sjogrenite, copper rust; synthetic hydrotalcites, hydrotalcite-like substances, clay minerals such as allophane, imogolite, kaolin; anion exchange resins and the like; and examples of the anion exchange resins include a weak acid anion exchange resin, a strong acid anion exchange resin and the like.

It is desired that the amount of the anion exchange filler is within the range of 2 to 40 parts by mass, preferably 5 to 40 parts by mass, more preferably 5 to 30 parts by mass, based on 100 parts by mass of the aqueous solution of the alginate. When the amount of the anion exchange filler is smaller than 2 parts by mass, sufficient ion exchangeability cannot be shown. On the other hand, when the amount of the anion exchange filler is larger than 40 parts by mass, it is difficult to form the granulated alginate gel.

Examples of the aqueous solution of the alginate include sodium alginate, potassium alginate, ammonium alginate and the like. It is desired that the concentration of the aqueous solution of the alginate is within the range of 0.1 to 5%, preferably 0.2 to 5%, more preferably 0.5 to 3%. When the concentration is lower than 0.1 %, it is difficult to form the alginate gel. On the other hand, when the concentration is higher than 5%, the viscosity is very high, and it is difficult to agitate the ion exchange filler and the aqueous solution of the alginate and to drop the liquid mixture.

In the method of making the granulated plant growing material of the present invention, the cation exchange filler and anion exchange filler are mixed with an aqueous solution of the alginate and agitated it to form a liquid mixture in the step (a), and the resulting liquid mixture is dropped in an aqueous solution of the polyvalent metal ion to form a gelation particle in the step (b).

Examples of the aqueous solution of the polyvalent metal ion used in the granulated plant growing material of the present invention, which is not limited as long as it is an aqueous solution of divalent or more metal ion that gives rise to a gelation by the reaction with the alginate, include an aqueous solution of chloride of polyvalent metal, such as calcium chloride, barium chloride, strontium chloride, nickel chloride, aluminum chloride, iron chloride, cobalt chloride; an aqueous solution of nitride of polyvalent metal, such as calcium nitride, barium nitride, aluminum nitride, iron nitride, cupper nitride, cobalt nitride; an aqueous solution of lactate of polyvalent metal, such as calcium lactate, barium lactate, aluminum lactate, zinc lactate; an aqueous solution of nitride of polyvalent metal, such as calcium nitride, barium nitride, aluminum nitride, iron nitride, cupper nitride, cobalt nitride; an aqueous solution of sulfate of polyvalent metal, such as calcium lactate, barium lactate, aluminum sulfate, zinc sulfate, cobalt sulfate; and the like. It is desired that the concentration of the aqueous solution of the polyvalent metal ion is within the range of 1 to 20%, preferably 2 to 10%, more preferably 5 to 10%. When the concentration is lower than 1 %, it is difficult to form the alginate gel. On the other hand, when the concentration is higher than 20%, it takes time to dissolve metal salt, and it is not economical to use an excessive amount of material.

The alginate, for example, sodium alginate is a neutral salt in the form such that the carboxyl group of alginic acid is bonded to Na ion and is water soluble although the alginic acid is water insoluble. When the polyvalent metal ion, for example, Ca ion is added to the aqueous solution of sodium alginate, ionic crosslinking is caused to give rise to a gelation. The property of the alginate and polyvalent metal ion is well known, thereby the sodium alginate is widely used as physicality improvers such as a thickener, gelling agent, stabilizer.

The granulated plant growing material of the present invention obtained as described above has a particle size of 0.2 to 6 mm, preferably 0.5 to 5 mm, more preferably 1 to 5 mm. When the particle size of the granulated plant growing material is smaller than 0.2 mm, the pore space between the granulated plant growing materials is small, and it is difficult for the plant to absorb the moisture in the pore space because the moisture in the pore space is strongly retained by the capillary force; or the drainage capacity is reduced, and it is difficult for plant root to absorb oxygen in the air. On the other hand, when the particle size of the granulated plant growing material is larger than 6 mm, the pore space between the granulated plant growing materials is large, and the moisture available by the plant, which does not flow out for a long term, is reduced because the amount of water, which can be easily absorbed by the plant, is reduced; or the bearing properties such as the properties, which prevent the plant from tumbling, are reduced.

The particle size of the granulated plant growing material can be adjusted depending on the viscosity of the liquid mixture dropped in the step (b) and the amount of the cation exchange filler and anion exchange filler in the liquid mixture in the step (a) of the method of making the granulated plant growing material. When the viscosity of the liquid mixture is low, the particle size is small. When the amount of the filler is small, the particle size is small. The "particle size" of the granulated plant growing material as used herein is the particle size adjusted by the classification with a screen mesh.

It is required that the granulated plant growing material of the present invention have a cation exchange capacity of not less than 5 meq/100 mL, preferably 7 to 50 meq/100 mL, more preferably 10 to 50 meq/100 mL. When the cation exchange capacity is lower than 5 meq/100 mL, sufficient ion exchange property is not shown, and even if adding a nutrient thereto, it early flows out by the irrigation and the like. On the other hand, when the cation exchange capacity is higher than 50 meq/100 mL, it is not economical to use an excessive amount of material.

It is required that the granulated plant growing material of the present invention have an anion exchange capacity of not less than 5 meq/100 mL, preferably 7 to 50 meq/100 mL, more preferably 10 to 50 meq/100 mL. When the anion exchange capacity is lower than 5 meq/100 mL, sufficient ion exchange property is not shown, and even if adding a nutrient thereto, it early flows out by the irrigation and the like. On the other hand, when the anion exchange capacity is higher than 50 meq/100 mL, it is not economical to use an excessive amount of material.

In the granulated plant growing material of the present invention, the size of the void between the granulated plant growing materials is adjusted by adjusting the particle size of the granulated plant growing material to the above range, it is possible to control the water retaining capacity as the water, which can be easily absorbed by the plant, or to secure the required air permeability. In the granulated plant growing material of the present invention, if further increasing the voids, which can retain water having a pF of 1.7 to 2.7, it is possible to obtain higher water retaining capacity. The methods of accomplishing the water retaining capacity include a method of combining with materials having the voids, that is, porous particulates having a continuous pore structure; and a method of forming the granulated plant growing material itself into a porous granulated plant growing material. The method of forming the granulated plant growing material itself into a porous granulated plant growing material includes a method of vacuum freeze drying when preparing the granulated plant growing material; or a method of formulating a hydrophilic surfactant to give rise to a gelation after foaming when preparing the granulated plant growing material. Concretely, the methods include a method such that the drying is conducted by vacuum freeze drying in the step (c) of the method of making the granulated plant growing material of the present invention; a method such that a foaming agent is further mixed in the step (a) of the method of making the granulated plant growing material of the present invention; and the like. In addition, higher water retainability may be accomplished by mixing separate granulated materials only in order to improve the water retainability to retain larger volume of water at pF of 1.7 to 2.7.

If the granulated plant growing material of the present invention contain porous particulates having a continuous pore structure, the granulated plant growing material may be added thereto in addition to the cation exchange filler and anion exchange filler in the step (a) of the method of making the granulated plant growing material of the present invention. Examples of the porous particulates having a continuous pore structure used in the granulated plant growing material of the present invention include a foam glass, metal porous medium, ceramic porous medium, polymer porous medium such as polyurethane foam and the like, which have a continuous pore structure. It is desired for the porous particulates having a continuous pore structure to have a pore size of 15 to 150 $\mu$m. When the pore size of the porous particulates is smaller than 15 $\mu$m, it is difficult for the plants to absorb the moisture in the pore because the moisture retained in the pore is strongly retained by the capillary force. On the other hand, when the pore size is larger than 150 $\mu$m, the amount of the capillary water at pF of 1.7 to 2.7 is reduced, and the moisture available by the plant, which does not flow out for a long term, is reduced.

It is possible to form the granulated plant growing material itself into a porous granulated plant growing material by adopting vacuum freeze drying in the step (c) of the method of making the granulated plant growing material of the present invention. Since the water is evaporated (sublimated) under the vacuum and frozen state to dry the granulated plant growing material in the vacuum freeze drying, it is possible to form it into the porous granulated plant growing material. The vacuum freeze drying is conducted at the conditions, that is, the degree of vacuum of 0.5 to 1.0 Pa and temperature of -5 to -10°C for 24 to 48 hours.

In case of further containing a foaming agent in the step (a) of the method of making the granulated plant growing material of the present invention, the foaming agent may be added thereto in addition to the cation exchange filler and anion exchange filler in the step (a) of the method. A hydrophilic surfactant is preferable as the foaming agent. It is possible to foam the liquid mixture when agitating it by using the hydrophilic surfactant having a HLB value showing hydrophile-lipophile balance of not less than 10 as the foaming agent. In addition, the surfactant is not limited, but a cationic or an anionic surfactant is not preferable because it generates an ion in the aqueous solution and the ion exchange filler adsorbs it. Concrete examples of the hydrophilic surfactants include polyoxyethylene sorbitan monolaurate, which is commercially available under the trade name of "Rheodol TW-L120" with a HLB value of 16.7 from Kao Corporation; polyoxyethylene sorbitan monostearate, which is commercially available under the trade name of "Rheodol TW-S120V" with a HLB value of 14.9 from Kao Corporation; polyoxyethylene sorbitan monooleate, which is commercially available under the trade name of "Rheodol TW-O120V" with a HLB value of 15.0 from Kao Corporation; "HLB value 15.0, trade name" polyoxyethylene sorbitan trioleate, which is commercially available under the trade name of "Rheodol TW-O320V" with a HLB value of 11.0 from Kao Corporation; and the like.

In addition, as described above, cations such as $K^+$, $Ca^{2+}$, $Mg^{2+}$ are necessary for the growth of plants. If the plants have no ability to retain such nutrients, the nutrients initially fed, for example, from a chemical fertilizer flow down together with water, and the plants cannot utilize them. The natural soil has an adsorption capacity thereof, but it is necessary to artificially add the adsorption capacity in the case of using a polymeric material. In addition, nitrogen is an essential element for the growth of plants, but there is a type of the soil which cannot be absorbed as an ammonium nitrogen as a cation and can be absorbed only as nitrate nitrogen as an anion, and the anion adsorption capacity is also required in addition to the cation adsorption capacity. In the soil, since the ammonium nitrogen adsorbed on the cation exchanger as the $NH_4^+$ also can be converted into $NO_3^-$ by microorganisms such as nitrifying bacteria in the soil, it may have low anion adsorption capacity. However, in the artificial soil without the nitrifying bacteria, it is necessary to have high anion adsorption capacity in order to directly adsorb the $NO_3^-$. Therefore, since the granulated plant growing material of the present invention has both excellent cation exchange capacity and excellent anion exchange capacity, it can be suitably used for an artificial soil.

When mixing separate granulated materials having a continuous pore structure with the granulated plant growing material of the present invention only for the purpose of the water retainability, it is desired that the pore size of the granulated material only for water retaining capacity has a peak of the pore size distribution in the range of 15 to 150 $\mu$m. When the peak value of the pore size distribution is smaller than 15 $\mu$m, it is difficult for the plants to absorb the moisture in the pore because the moisture retained in the pore is strongly retained by the capillary force. On the other hand, when the peak value of the pore size distribution is larger than 150 $\mu$m, the amount of the capillary water at pF of 1.7 to 2.7 is reduced, and the moisture available by the plant, which does not flow out for a long term, is reduced.

[Artificial soil]

The plant growable artificial soil only by supplying water of the present invention is prepared by granulating fertilizer retainable fillers to form a granulated material having a particle size of 0.2 to 6 mm; and then supporting a fertilizer component on the granulated material.

The fertilizer retainable fillers have a cation exchange capacity or an anion exchange capacity such that species of an element necessary for the growth of plants can be carried in the form of an ion and can release ions adsorbed by plant (root) acids, concretely polyvalent carboxylic acids such as citric acid.

In addition, the cation-based or anion-based fertilizer component supported artificial soil of the present invention is roughly classified into two types, an artificial soil, of which a cation necessary for the growth of plants is adsorbed on a cation adsorbent, and artificial soil, of which an anion necessary for the growth of plants is adsorbed on a anion adsorbent, and the cation and anion can be minutely classified for every ion. As the commercially available form of the artificial soil of the present invention, the artificial soil can be sold for every type of ion or can be distributed in the form of a mixture of some ionic species.

Examples of the cationic species necessary for the growth of plants indicated by the form of ion include $K^+$, $Ca^{2+}$, $Mg^{2+}$, $Fe^{2+}$, $Mn^{2+}$, $Zn^{2+}$, $Ni^{2+}$, $Cu^{2+}$ and $Mo^{2+}$, or the form of mixtures thereof. Examples of the important cationic species as the three major nutrients include $K^+$.

Examples of the anionic species necessary for the growth of plants indicated by the form of ion include $NO_3^-$, $PO_4^{3-}$, $SO_4^{2-}$ and $Cl^-$, or the form of mixtures thereof. Examples of the important anionic species as the three major nutrients include $NO_3^-$ and $PO_4^{3-}$.

Examples of the cation-based fertilizer retainable fillers or cation adsorbents include zeolite, smectite minerals, mica minerals, vermiculite, cation exchange resins, humus and the like. Examples of the cation exchange resins include weakly acidic cation exchange resins, strong acid cation exchange resins and the like.

Examples of the anion-based fertilizer retainable fillers or anion adsorbents include double hydroxide such as hydrotalcite and double hydroxides, allophane, imogolite, kaolin, and anion exchange resins. Examples of the anion exchange resins include weakly basic anion exchange resin, strong basic anion exchange resin and the like.

The fertilizer retainable fillers or ion adsorbents are granulated such that it has a particle size of 0.2 to 6 mm.

Concretely, the fertilizer retainable fillers or ion adsorbents may be in the form of a primary particle as a simple substance or in the form of secondary aggregation of primary particles due to the bond of the primary particles, and are granulated such that it has a particle size of 0.2 to 6 mm, preferably 0.5 to 5.0 mm. When the particle size of the fertilizer retainable filler or ion adsorbent is smaller than 0.2 mm, the breathability in the water-retaining state is reduced due to the irrigation, and it is difficult to take in air from the root of plants. On the other hand, when the particle size is larger than 6 mm, the water retaining capacity is significantly reduced or the function which prevents the plant from tumbling is reduced.

It is considered that a method of granulating the fertilizer retainable fillers or ion adsorbents is conducted by classifying granulated zeolite and bentonite which are commercially available to the appropriate particle size or by granulating powdery ion adsorbent to a spherical shape or pellet shape with a granulator, but methods by using the following two compositions:

(1) alginate, cross-linking agent thereof (polyvalent metal ions) and fertilizer retainable fillers or ion adsorbents
(2) binder and fertilizer retainable fillers or ion adsorbents

are considered as a preferable method.

Examples of the alginates used in the (1) include sodium alginate, potassium alginate, ammonium alginate and the like. Examples of the polyvalent metal ions, which are not particularly limited as long as it is metal salt of two or more valances so as to basically cause gelation by the reaction with the alginate, includes chloride of polyvalent metal, such as calcium chloride, barium chloride, strontium chloride, nickel chloride, aluminum chloride, iron chloride, cobalt chloride; nitrate of polyvalent metal, such as calcium nitrate, barium nitrate, aluminum nitrate, iron nitrate, copper nitrate, cobalt nitrate; lactate of polyvalent metal, such as calcium lactate, barium lactate, aluminum lactate, zinc lactate; sulfate of polyvalent metal, such as aluminum sulfate, zinc sulfate, cobalt sulfate; and the like.

The granulation using alginate gel is conducted by mixing the fertilizer retainable filler or ion adsorbent with an aqueous solution of the alginate and agitating it to form a liquid mixture, and then dropping the resulting liquid mixture in an aqueous solution of the polyvalent metal ion to form a gelation particle. It is desired that the amount of fertilizer retainable filler or the ion adsorbent is within the range of 1 to 60 parts by mass, preferably 5 to 50 parts by mass, more preferably 10 to 40 parts by mass, per 100 parts by mass of the aqueous solution of the alginate. It is desired that the concentration of the alginate in the aqueous solution of the alginate is within the range of 0.1 to 5% by mass, preferably 0.2 to 5% by mass, more preferably 0.5 to 3% by mass. It is desired that the metal ion concentration in the aqueous solution of the polyvalent metal ion is within the range of 1 to 20% by mass, preferably 2 to 10% by mass, more preferably 5 to 10% by mass.

Examples of the binders of the (2) include polymer resins, such as polyethylene glycol, polyethylene, vinyl acetate, cellulose derivatives (such as carboxymethyl cellulose), acrylic resins, urethane resins, epoxy resins; polysaccharides, such as carrageenan, agar; gums, such as xanthan gum, guar gum, gellan gum; and the like.

A variety of methods are considered as a granulation method using the binder. Examples of the granulation methods include, for example, a method comprising the steps of mixing the fertilizer retainable filler or ion adsorbent with the binder in a state such that the binder melts, and then solidifying the mixture to crush it to a suitable size; a method with a granulator described in JP 2006-169064 A; and the like, but are not limited thereto.

In the present invention, it is preferable that a granulated material is porous from the viewpoint of water retaining capacity. In order to form the porous granulated material, several methods may be considered. For example, a method of making the granulated material itself porous, and a granulating method by using porous water retainable filler together with the fertilizer retainable filler or ion adsorbent and the like are considered.

The porous granulated material can be formed, for example, by means of freeze-drying the granulated material itself.

In the case of using porous water retainable fillers, they may be mixed with the fertilizer retainable filler or ion adsorbent during manufacturing. It is desired from a viewpoint of manufacturing that the water retainable filler has a particle size with the level of several tens of $\mu$m or less as with the fertilizer retainable filler or ion adsorbent.

Examples of the water retainable filler include various minerals and inorganic materials having hydrophilicity, such as zeolite and smectite mineral, mica mineral, talc, and double hydroxides; porous granulated material, such as foam glass, porous metal, porous ceramic, polymeric porous material (such as, concretely, crushed polyurethane foam, crushed polyvinyl alcohol (PVA) foam, a crushed material of sintered hydrophilic polyethylene), hydrophilic short fibers and the like.

The artificial soil of the present invention may optionally contain other fillers in addition to the fertilizer retainable filler or ion adsorbent and the water retainable filler. Examples of the other fillers include silica, activated carbon, cellulose powder, Vinylon short fiber and the like. They are used for a variety of purposes of extending, color adjustment, and enhancing shape retention. The other fillers may be mixed with the fertilizer retainable filler or ion adsorbent and the water retainable fillers in a proper amount during granulating.

The amount of the fertilizer retainable filler or ion adsorbent in the artificial soil of the present invention is within the range of 20 to 95% by mass, preferably 30 to 80% by mass of the total amount (the amount of artificial soil gelled and dried). When the amount of the fertilizer retainable filler or ion adsorbent in the artificial soil of the present invention is smaller than 20% by mass, the fertilizer retaining capability is insufficient. On the other hand, when amount is larger than 95% by mass, the water retaining capability tends to be insufficient.

The amount of the water retainable filler in the artificial soil of the present invention is within the range of 5 to 70% by mass, preferably 5 to 60% by mass of the total amount (the amount of artificial soil gelled and dried). When the amount of the water retainable filler is smaller than 5% by mass, the water retaining capability is insufficient. On the other hand, when amount is larger than 70% by mass, the fertilizer retaining capacity tends to be insufficient.

The other fillers can be used depending on the purpose, and the amount of other fillers in the artificial soil of the present invention, which is not limited, is 90% by mass or less of the total amount. When the amount of other fillers is larger than 90% by mass, the fertilizer retaining capacity and water retaining capacity are insufficient.

A fertilizer component is supported on the granulated material obtained as described above. Examples of methods of supporting the fertilizer component include a method of immersing the granulated material with ionic solution after the granulation, a method of simultaneously mixing fertilizer components such as a reagent, a commercial fertilizer as a filler during the granulation, a method of supporting the fertilizer component as an ionized substance by a chemical reaction during the granulation, combinations thereof.

The elements necessary for the growth of the plants are mainly potassium, phosphorus and nitrogen, which are required to be in the form of a cation such as $K^+$ or an anion such as $NO_3^-$, $PO_4^{3+}$ in the case of vegetables. In addition to those, there are elements which is necessary in a medium amount, such as calcium, magnesium, sulfur and elements which is necessary in a trace amount, such as manganese, boron.

A desired fertilizer component is supported on the granulated material by ion exchange of the fertilizer retainable filler or ion adsorbent is supported in a solution containing an element necessary for the plants. Since there are two types of adsorbents, that is, a cation adsorbent and an anion adsorbent as the ion adsorbent, a cation adsorbent adsorbs only potassium ions ($K^+$) by the contact of the cation adsorbent with potassium nitrate solution, and nitrate ion ($NO_3^-$) as an anion is not adsorbed. Therefore, the artificial soil, on which potassium ions ($K^+$) is only supported, is formed by this method. When an anion adsorbent is used as the ion adsorbent in the method, by the contact of the anion adsorbent with potassium nitrate solution, the artificial soil, which potassium ions ($K^+$) is not adsorbed and nitrate ion ($NO_3^-$) is only adsorbed, is formed.

Examples of the fertilizer components, which can be generally used in this process, include potassium nitrate solution (containing potassium as a cation and nitrogen as an anion), calcium chloride solution (containing calcium), dihydrogen phosphate (containing potassium as a cation and phosphorus in the form of phosphate ion $PO_4^{3-}$ as an anion) and the like. When immersing the fertilizer retainable filler or ion adsorbent and optionally water retainable filler with the above aqueous solution, the artificial soil having each ion by ion exchange is obtained.

The plant growable artificial soil only by supplying water obtained as described above is artificial soil containing potassium and nitrogen, artificial soil containing calcium, artificial soil containing potassium and phosphorus and artificial soil containing magnesium and sulfur, and the artificial soil containing the all fertilizer components may be formed by mixing each fertilizer component in a proper amount. In addition, the artificial soil such that any fertilizer component is contained in a large amount may be formed.

It is desired that the granulated materials have a cation exchange capacity of not less than 5 meq/100 cc and an anion exchange capacity of not less than 5 meq/100 cc. The cation exchange capacity is preferably 7 to 50 meq/100 cc, more preferably 10 to 50 meq/100 cc. When the cation exchange capacity is less than 5 meq/100 cc, sufficient ion exchange property is not shown, and even if a fertilizer is adsorbed thereon, it early flows out by the irrigation and the like. In addition, the cation exchange capacity may be higher than 50 meq/100 cc, it is not economical as a material. Furthermore, the anion exchange capacity is preferably 7 to 50 meq/100 cc, more preferably 10 to 50 meq/100 cc. When the anion exchange capacity is less than 5 meq/100 cc, sufficient ion exchange property is not shown, and even if a fertilizer is adsorbed thereon, it early flows out by the irrigation and the like. In addition, the anion-exchange capacity may be higher than 50 meq/100 cc, it is not economical as a material.

The artificial soil of the present invention basically contains a fertilizer component such that plants can grow only by supplying water, particularly tap-water. In case of the artificial soil conventionally used, even if it contains a fertilizer component, it flows out due to a large amount of water, and the fertilizer is insufficient. However, since the artificial soil of the present invention retains the fertilizer component in the granulated material, the plants can effectively take the fertilizer component only in the needed amount by ion exchange due to plant (root) acids from the plants.

The cation-based or anion-based fertilizer component supported artificial soil of the present invention has a total amount of each ion extracted by roots acid component such as citric acid of not less than 40 meq/L, preferably 50 to 150 meq/L. When the total amount is smaller than 40 meq/L, a recommended rate of fertilizer application for a general soil of 5 to 12 meq/L is satisfied in the case of using as an artificial soil. As the concrete examples of the recommended rate of fertilizer application, K: 10 to 50 Kg/10a = 2 to 10.6 meq/L, $NO_3^-$: 10 to 50 Kg/10a = 2 to 8.1 meq/L, $(PO_4)^{3-}$: 10 to 35 Kg/10a = 3 to 11.1 meq/L, in the Agricultural Research Center in Nara prefecture.

Since the cation-based or anion-based fertilizer component supported artificial soil obtained in the present invention is the artificial soil, on which a specified cation or anion necessary for the growth of plants is supported, it is possible to apply fertilizers, particularly elements which are necessary depending on the state of the growth of plants at a pinpoint, and it is very useful. Since an artificial soil having two types or more of ions can be easily prepared by mixing the artificial soil having one ion at a pinpoint, it is possible to apply fertilizers depending on each soil or each plant species, and the utilizing range thereof is very widened.

In the plant growable artificial soil only by supplying water and cation-based or anion-based fertilizer component supported artificial soil of the present invention, plants can grow only by supplying the artificial soils with water, but they can be used by optionally mixing with other soil components, soil and the like.

In addition, in the artificial soil of the present invention, the fertilizer component is naturally reduced when the growth of plants is finished, but it can be used by charging again the necessary elements if necessary.

## EXAMPLES

The following Examples and Comparative Examples further illustrate the present invention in detail but are not to be construed to limit the scope of the present invention.

[Granulated plant growing material for artificial soil]

(Examples 1 to 7, 10 to 14 and Comparative Examples 1 to 10)

(1) Preparation of mixture

Ingredients of the plant growing material composition shown in the following Tables 1 to 4 were agitated for 3 minutes with a mixer for household purposes ("SM-L57" available from SANYO Electric Co., Ltd.) to prepare a liquid mixture.

**Table 1**

| Plant growing material composition | | Example | | | | | | |
|---|---|---|---|---|---|---|---|---|
| | | 1 | 2 | 3 | 4 | 5 | 6 | 7 |
| Cation exchange filler | | | | | | | | |
| Zeolite | *1 | 10 | 20 | 30 | 7 | 5 | 15 | 15 |
| Bentonite | *2 | - | - | - | - | 5 | - | - |
| Anion exchange filler | | | | | | | | |
| Hydrotalcite | *3 | 10 | 7 | 7 | 20 | 30 | 15 | 15 |
| Other fillers | | | | | | | | |
| Kaolin clay powder | *4 | - | - | - | - | - | - | - |
| Silica powder | *5 | - | - | - | - | - | - | - |
| Sodium alginate (5% aqueous solution) | *6 | 100 | 100 | 100 | 100 | 100 | 100 | 100 |
| Porous particulates | | | | | | | | |
| Foam glass | *7 | - | - | - | - | - | 10 | - |
| Polymer porous medium | *8 | - | - | - | - | - | - | 10 |
| Surfactant A | *9 | - | - | - | - | - | - | - |
| Surfactant B | *10 | - | - | - | - | - | - | - |
| Surfactant C | *11 | - | - | - | - | - | - | - |
| Surfactant D | *12 | - | - | - | - | - | - | - |

(continued)

| Plant growing material composition | | Example | | | | | | |
|---|---|---|---|---|---|---|---|---|
| | | 1 | 2 | 3 | 4 | 5 | 6 | 7 |
| Surfactant E | *13 | - | - | - | - | - | - | - |

(*1) Artificial zeolite, commercially available from Ecowel Inc. under the trade name of "Ryukyulite 600"
(*2) Bentonite, commercially available from Kasanen Industry Co., Ltd. under the trade name of "Kansai Bentonite"
(*3) Reagent-grade hydrotalcite, commercially available from Wako Pure Chemical Industries, Ltd.
(*4) Kaolin clay, commercially available from Showa Chemical Co., Ltd. under the trade name of "NK300"
(*5) Silica, commercially available from Hess Pumice Products, Inc. under the trade name "NCS-3"
(*6) Reagent-grade Sodium alginate, commercially available from Wako Pure Chemical Industries, Ltd.
(*7) Foam glass, commercially available from Trim Co., Ltd. under the trade name of "Supersol" (average pore size 60 $\mu$m)
(*8) Polyurethane foam, commercially available from AC Chemical Co., Ltd. under the trade name of "AC sponge U"
(*9) Surfactant A: Polyoxyethylene sorbitan monolaurate, commercially available from Kao Corporation under the trade name of "Rheodol TW-L120"; HLB value 16.7
(*10) Surfactant B: Polyoxyethylene sorbitan monostearate, commercially available from Kao Corporation under the trade name of "Rheodol TW-S120V"; HLB value 14.9
(*11) Surfactant C: Polyoxyethylene sorbitan trioleate, commercially available from Kao Corporation under the trade name of "Rheodol TW-O320V"; HLB value 11.0
(*12) Surfactant D: Sorbitan monopalmitate, commercially available from Kao Corporation under the trade name of "Rheodol SP-P10"; HLB value 6.7
(*13) Surfactant E: Glycerol monostearate, commercially available from Kao Corporation under the trade name of "Rheodol MS-60"; HLB value 3.5

**Table 2**

| Plant growing material composition | | Example | | | | | | |
|---|---|---|---|---|---|---|---|---|
| | | 8 | 9 | 10 | 11 | 12 | 13 | 14 |
| Cation exchange filler | | | | | | | | |
| Zeolite | *1 | 20 | 10 | 15 | 15 | 15 | 15 | 15 |
| Bentonite | *2 | - | - | - | - | - | - | - |
| Anion exchange filler | | | | | | | | |
| Hydrotalcite | *3 | 20 | 10 | 15 | 15 | 15 | 15 | 15 |
| Other fillers | | | | | | | | |
| Kaolin clay powder | *4 | - | - | - | - | - | - | - |
| Silica powder | *5 | - | - | - | - | - | - | - |
| Sodium alginate (5% aqueous solution) | *6 | 100 | 100 | 100 | 100 | 100 | 100 | 100 |
| Porous particulates | | | | | | | | |
| Foam glass | *7 | - | - | - | - | - | - | - |
| Polymer porous medium | *8 | - | - | - | - | - | - | - |
| Surfactant A | *9 | - | - | 2 | - | - | - | - |
| Surfactant B | *10 | - | - | - | 2 | - | - | - |
| Surfactant C | *11 | - | - | - | - | 2 | - | - |
| Surfactant D | *12 | - | - | - | - | - | 2 | - |

(continued)

| Plant growing material composition | | Example | | | | | | |
|---|---|---|---|---|---|---|---|---|
| | | 8 | 9 | 10 | 11 | 12 | 13 | 14 |
| Surfactant E | *13 | - | - | - | - | - | - | 2 |

(*1) Artificial zeolite, commercially available from Ecowel Inc. under the trade name of "Ryukyulite 600" (*2) Bentonite, commercially available from Kasanen Industry Co., Ltd. under the trade name of "Kansai Bentonite" (*3) Reagent-grade hydrotalcite, commercially available from Wako Pure Chemical Industries, Ltd.

(*4) Kaolin clay, commercially available from Showa Chemical Co., Ltd. under the trade name of "NK300" (*5) Silica, commercially available from Hess Pumice Products, Inc. under the trade name "NCS-3" (*6) Reagent-grade Sodium alginate, commercially available from Wako Pure Chemical Industries, Ltd.

(*7) Foam glass, commercially available from Trim Co., Ltd. under the trade name of "Supersol" (average pore size 60 $\mu$m)

(*8) Polyurethane foam, commercially available from AC Chemical Co., Ltd. under the trade name of "AC sponge U" (*9) Surfactant A: Polyoxyethylene sorbitan monolaurate, commercially available from Kao Corporation under the trade name of "Rheodol TW-L120"; HLB value 16.7 (*10) Surfactant B: Polyoxyethylene sorbitan monostearate, commercially available from Kao Corporation under the trade name of "Rheodol TW-S120V"; HLB value 14.9 (*11) Surfactant C: Polyoxyethylene sorbitan trioleate, commercially available from Kao Corporation under the trade name of "Rheodol TW-O320V"; HLB value 11.0 (*12) Surfactant D: Sorbitan monopalmitate, commercially available from Kao Corporation under the trade name of "Rheodol SP-P10"; HLB value 6.7 (*13) Surfactant E: Glycerol monostearate, commercially available from Kao Corporation under the trade name of "Rheodol MS-60"; HLB value 3.5

**Table 3**

| Plant growing material composition | | Comparative Example | | | | |
|---|---|---|---|---|---|---|
| | | 1 | 2 | 3 | 4 | 5 |
| Cation exchange filler | | | | | | |
| Zeolite | *1 | 20 | 20 | - | - | 10 |
| Bentonite | *2 | - | - | - | - | - |
| Anion exchange filler | | | | | | |
| Hydrotalcite | *3 | - | - | 20 | 20 | 10 |
| Other fillers | | | | | | |
| Kaolin clay powder | *4 | - | - | - | - | - |
| Silica powder | *5 | - | - | - | - | - |
| Sodium alginate (5% aqueous solution) | *6 | 100 | 100 | 100 | 100 | 100 |
| Porous particulates | | | | | | |
| Foam glass | *7 | - | - | - | - | - |
| Polymer porous medium | *8 | - | - | - | - | - |
| Surfactant A | *9 | - | - | - | - | - |
| Surfactant B | *10 | - | - | - | - | - |
| Surfactant C | *11 | - | - | - | - | - |
| Surfactant D | *12 | - | - | - | - | - |

(continued)

| Plant growing material composition | | Comparative Example | | | | |
|---|---|---|---|---|---|---|
| | | 1 | 2 | 3 | 4 | 5 |
| Surfactant E | *13 | - | - | - | - | - |

(*1) Artificial zeolite, commercially available from Ecowel Inc. under the trade name of "Ryukyulite 600"
(*2) Bentonite, commercially available from Kasanen Industry Co., Ltd. under the trade name of "Kansai Bentonite"
(*3) Reagent-grade hydrotalcite, commercially available from Wako Pure Chemical Industries, Ltd.
(*4) Kaolin clay, commercially available from Showa Chemical Co., Ltd. under the trade name of "NK300"
(*5) Silica, commercially available from Hess Pumice Products, Inc. under the trade name "NCS-3"
(*6) Reagent-grade Sodium alginate, commercially available from Wako Pure Chemical Industries, Ltd.
(*7) Foam glass, commercially available from Trim Co., Ltd. under the trade name of "Supersol" (average pore size 60 μm)
(*8) Polyurethane foam, commercially available from AC Chemical Co., Ltd. under the trade name of "AC sponge U"
(*9) Surfactant A: Polyoxyethylene sorbitan monolaurate, commercially available from Kao Corporation under the trade name of "Rheodol TW-L120"; HLB value 16.7
(*10) Surfactant B: Polyoxyethylene sorbitan monostearate, commercially available from Kao Corporation under the trade name of "Rheodol TW-S120V"; HLB value 14.9
(*11) Surfactant C: Polyoxyethylene sorbitan trioleate, commercially available from Kao Corporation under the trade name of "Rheodol TW-O320V"; HLB value 11.0
(*12) Surfactant D: Sorbitan monopalmitate, commercially available from Kao Corporation under the trade name of "Rheodol SP-P10"; HLB value 6.7
(*13) Surfactant E: Glycerol monostearate, commercially available from Kao Corporation under the trade name of "Rheodol MS-60"; HLB value 3.5

**Table 4**

| Plant growing material composition | | Comparative Example | | | | |
|---|---|---|---|---|---|---|
| | | 6 | 7 | 8 | 9 | 10 |
| Cation exchange filler | | | | | | |
| Zeolite | *1 | 10 | - | - | - | - |
| Bentonite | *2 | - | - | - | - | - |
| Anion exchange filler | | | | | | |
| Hydrotalcite | *3 | 10 | - | - | - | - |
| Other fillers | | | | | | |
| Kaolin clay powder | *4 | - | 10 | - | - | - |
| Silica powder | *5 | - | - | 10 | - | - |
| Sodium alginate (5% aqueous solution) | *6 | 100 | 100 | 100 | 100 | 100 |
| Porous particulates | | | | | | |
| Foam glass | *7 | - | - | - | 10 | - |
| Polymer porous medium | *8 | - | - | - | - | 10 |
| Surfactant A | *9 | - | - | - | - | - |
| Surfactant B | *10 | - | - | - | - | - |
| Surfactant C | *11 | - | - | - | - | - |
| Surfactant D | *12 | - | - | - | - | - |

(continued)

| Plant growing material composition | | Comparative Example | | | | |
|---|---|---|---|---|---|---|
| | | 6 | 7 | 8 | 9 | 10 |
| Surfactant E | *13 | - | - | - | - | - |

(*1) Artificial zeolite, commercially available from Ecowel Inc. under the trade name of "Ryukyulite 600"
(*2) Bentonite, commercially available from Kasanen Industry Co., Ltd. under the trade name of "Kansai Bentonite"
(*3) Reagent-grade hydrotalcite, commercially available from Wako Pure Chemical Industries, Ltd.
(*4) Kaolin clay, commercially available from Showa Chemical Co., Ltd. under the trade name of "NK300"
(*5) Silica, commercially available from Hess Pumice Products, Inc. under the trade name "NCS-3"
(*6) Reagent-grade Sodium alginate, commercially available from Wako Pure Chemical Industries, Ltd.
(*7) Foam glass, commercially available from Trim Co., Ltd. under the trade name of "Supersol" (average pore size 60 $\mu$m)
(*8) Polyurethane foam, commercially available from AC Chemical Co., Ltd. under the trade name of "AC sponge U"
(*9) Surfactant A: Polyoxyethylene sorbitan monolaurate, commercially available from Kao Corporation under the trade name of "Rheodol TW-L120"; HLB value 16.7
(*10) Surfactant B: Polyoxyethylene sorbitan monostearate, commercially available from Kao Corporation under the trade name of "Rheodol TW-S120V"; HLB value 14.9
(*11) Surfactant C: Polyoxyethylene sorbitan trioleate, commercially available from Kao Corporation under the trade name of "Rheodol TW-O320V"; HLB value 11.0
(*12) Surfactant D: Sorbitan monopalmitate, commercially available from Kao Corporation under the trade name of "Rheodol SP-P10"; HLB value 6.7
(*13) Surfactant E: Glycerol monostearate, commercially available from Kao Corporation under the trade name of "Rheodol MS-60"; HLB value 3.5

(2) Preparation of granulated plant growing material

The mixture obtained as described above was gradually added drop-wise to 5% calcium chloride aqueous solution as a multivalent metal ion aqueous solution at a dropping speed of one drop per a second with a measuring pipette. After the gelation of the drops into granulated materials, the granulated materials were collected, washed with water and dried at 55°C in an oven for 24 hours. A particle size of the dried granulated materials is adjusted with a mesh screen such that the granulated materials remained over 2 mm mesh and passed through (under) 4 mm mesh to obtain a granulated plant growing material. In Comparative Examples 5 and 6, the mixture was added in the state such that the drops were connected with each other by increasing the dropping speed to about 3 mL/sec. After the gelation of the drops in the form of short fibers, the short fiber materials were collected, washed with water and dried at 55°C in an oven for 24 hours. And then the dried short fiber materials were crushed in a mortar to adjust the particle size thereof with a mesh screen such that the crushed materials remained over 75 $\mu$m mesh and passed through (under) 106 $\mu$m mesh to use them as the samples. In Comparative Examples 2 and 4, the mixture was extruded to granulated materials having a given particle size with a spuit in the multivalent metal ion aqueous solution. After the gelation of the granulated materials, the granulated materials were collected, washed with water and dried at 55°C in an oven for 24 hours. A particle size of the dried granulated materials is adjusted with a mesh screen such that the granulated materials remained over 8 mm mesh and passed through (under) 10 mm mesh to use them as the samples.

(Example 8)

The granulated plant growing material was prepared as described in Example 1, except that the drying at 55°C in an oven for 24 hours was replaced with vacuum freeze drying (at a temperature of -10°C, a vacuum degree of 0.5 Pa and a drying time of 48 hours) with a vacuum freeze drier "Eyela FDU-1100", manufactured by Tokyo Rikakikai Co., Ltd. and a square drying chamber "Eyela DRC-1100", manufactured by Tokyo Rikakikai Co., Ltd.

(Example 9)

The granulated plant growing material was prepared as described in Claim 1, except that the drying at 55°C in an oven for 24 hours was replaced with vacuum drying (at a temperature of 20°C, a vacuum degree of 0.5 Pa and a drying time of 48 hours) with a vacuum freeze drier "Eyela FDU-1100", manufactured by Tokyo Rikakikai Co., Ltd. and a square drying chamber "Eyela DRC-1100", manufactured by Tokyo Rikakikai Co., Ltd.

With respect to the granulated plant growing material obtained, the cation exchange capacity (CEC), anion exchange capacity (AEC), gaseous phase ratio, water retaining capacity at a pF of 1.7 to 2.7 and growth of radish were measured or evaluated, and the results are shown in Table 12 to Table 16. The test methods are described later.

(Example 15)

As fertilizer retainable fillers, 10g of zeolite (cation exchangeable), 2g of bentonite (cation exchangeable) and 10g of hydrotalcite (anion exchangeable) were added to 0.5% by mass sodium alginate solution, and agitated for 3 minutes with a mixer for household purposes ("SM-L57" available from SANYO Electric Co., Ltd.) to prepare a liquid mixture. The mixture was gradually added drop-wise to 5% by mass calcium chloride aqueous solution as a multivalent metal ion aqueous solution at a dropping speed of one drop per a second with a measuring pipette. After the gelation of the drops into granulated materials, the gelled granulated materials were collected, washed with water and dried at 55°C in an oven for 24 hours. The dried granulated materials were immersed in 5% by mass $KNO_3$ aqueous solution for 6 hours with gradually agitating to conduct ion exchanging, and then washed with water and dried at 55°C in an oven for 24 hours. A particle size of the dried granulated materials is adjusted with a mesh screen such that the granulated materials remained over 2 mm mesh and passed through (under) 4 mm mesh to prepare an artificial soil containing potassium and nitrogen.

The gel particles separately prepared as described above were immersed in 2.5% by mass $KH_2PO_4$ aqueous solution for 6 hours with gradually agitating, and then washed with water and dried at 55°C in an oven for 24 hours. A particle size of the dried granulated materials is adjusted with a mesh screen such that the granulated materials remained over 2 mm mesh and passed through (under) 4 mm mesh to prepare an artificial soil containing potassium and phosphorus.

The gel particles separately prepared as described above were immersed in 5% by mass $Ca(NO_3)_2$ aqueous solution for 6 hours with gradually agitating, and then washed with water and dried at 55°C in an oven for 24 hours. A particle size of the dried granulated materials is adjusted with a mesh screen such that the granulated materials remained over 2 mm mesh and passed through (under) 4 mm mesh to prepare an artificial soil containing calcium and nitrogen.

With the mixture of the three type artificial soils described above in a weight ratio of 1:1:1, the growth of radish was evaluated, and the result is shown in Table 5. In Table 5, the type and amount of the fertilizer retainable fillers, the type and amount of the water retainable fillers, the type and amount of the other fullers, the cation exchange capacity (CEC) and anion exchange capacity (AEC) of the artificial soils and the type of the supported ion solution also are shown.

(Examples 16 to 24)

The artificial soils were prepared by treating as described in Example 1, except that the fertilizer retainable fillers, water retainable fillers and the other fillers used were replaced with those shown in Table 5. With respect to the obtained artificial soils, the growth of radish was evaluated, and the results are shown in Table 5.

(Comparative Examples 11 to 23)

The samples were treated as described in Example 15, except that the ingredients shown in Table 6 and Table 7 were used. In Comparative Examples 11 to 14, the fertilizer ion was not supported. In Comparative Examples 15 to 20, the cation-based or anion-based fertilizer retainable fillers were very small amount or were not contained. In Comparative Examples 21 to 23, the fertilizer retainable fillers were not contained. In Comparative Examples 11 to 23, the growth of radish was evaluated as described in Example 15, and the results are shown in Table 6 and Table 7.

**Table 5**

| Plant growing material composition | | Example | | | | |
|---|---|---|---|---|---|---|
| | | 15 | 16 | 17 | 18 | 19 |
| Cation-based fertilizer retainable filler | | | | | | |
| Zeolite | *1 | 10 | 10 | - | 10 | 30 |
| Bentonite | *2 | 2 | - | 10 | 2 | - |
| Cation exchange resin | *3 | - | - | - | - | - |
| Anion-based fertilizer retainable filler | | | | | | |
| Hydrotalcite | *4 | 10 | 10 | 10 | 10 | 10 |

(continued)

| Plant growing material composition | | Example | | | | |
|---|---|---|---|---|---|---|
| | | 15 | 16 | 17 | 18 | 19 |
| Kaolin | *5 | - | - | - | 10 | - |
| Anion exchange resin | *6 | - | - | - | - | - |
| Water retainable filler | | | | | | |
| Foam glass | *7 | - | - | - | - | - |
| Porous polyethylene | *8 | - | - | - | - | - |
| Polyurethane foam | *9 | - | - | - | - | - |
| Other fillers | | | | | | |
| Silica | *10 | - | - | - | - | - |
| Activated carbon | *11 | - | - | - | - | - |
| Cellulose powder | *12 | - | - | - | - | - |
| Vinylon short fibers | *13 | - | - | - | - | - |
| Sodium alginate (0.5% aqueous solution) | | 100 | 100 | 100 | 100 | 100 |
| CEC (meq/100cc) | | 12 | 10 | 12 | 11 | 15 |
| AEC (meq/100cc) | | 5 | 6 | 6 | 7 | 5 |
| Supported ion solution | | | | | | |
|   5% $KNO_3$ | | ○ | ○ | ○ | ○ | ○ |
|   2.5% $KH_2PO_4$ | | ○ | ○ | ○ | ○ | ○ |
|   5% $Ca(NO_3)_2$ | | ○ | ○ | ○ | ○ | ○ |
|   Growth of radish | | ○ | ○ | ○ | ○ | ○ |

(*1) Artificial zeolite, commercially available from Ecowel Inc. under the trade name of "Ryukyulite 600" (*2) Bentonite, commercially available from Kasanen Industry Co., Ltd. under the trade name of "Kansai Bentonite" (*3) Cation exchange resin, commercially available from Organo Corporation under the trade name of "Amberlite IRC-76" (*4) Reagent-grade hydrotalcite, commercially available from Wako Pure Chemical Industries, Ltd.

(*5) Kaolin clay, commercially available from Showa Chemical Co., Ltd. under the trade name of "NK300" (*6) Anion exchange resin, commercially available from Organo Corporation under the trade name of "Amberlite IRA-400" (*7) Foam glass, commercially available from Trim Co., Ltd. under the trade name of "Supersol" (average pore size 60 $\mu$m)

(*8) Porous polyethylene, commercially available from Asahi Kasei Chemicals Corporation under the trade name of "Sunfine AQ" (*9) Open-cell polyurethane foam, commercially available from AC Chemical Co., Ltd. under the trade name of "AC sponge U" (*10) Silica, commercially available from Hess Pumice Products, Inc. under the trade name of "NCS-3" (*11) Reagent-grade activated carbon, commercially available from Wako Pure Chemical Industries, Ltd.

(*12) Cellulose Powder, commercially available from Asahi Kasei Chemicals Corporation under the trade name of "Ceolus" (*13) Vinylon short fibers, commercially available from Kuraray Co., Ltd. under the trade name of "VF1203-2" (*14) Reagent-grade Sodium alginate, commercially available from Wako Pure Chemical Industries, Ltd.

**Table 5-2**

| Plant growing material composition | | Example | | | | |
|---|---|---|---|---|---|---|
| | | 20 | 21 | 22 | 23 | 24 |
| Cation-based fertilizer retainable filler | | | | | | |
| Zeolite | *1 | - | 10 | 5 | 10 | - |
| Bentonite | *2 | - | 10 | 5 | 2 | - |
| Cation exchange resin | *3 | 2 | - | - | - | 2 |
| Anion-based fertilizer retainable filler | | | | | | |
| Hydrotalcite | *4 | 10 | 10 | - | 10 | - |
| Kaolin | *5 | - | 20 | - | - | - |
| Anion exchange resin | *6 | 2 | - | 5 | - | 2 |
| Water retainable filler | | | | | | |
| Foam glass | *7 | - | - | - | - | - |
| Porous polyethylene | *8 | - | - | - | - | - |
| Polyurethane foam | *9 | - | - | - | - | - |
| Other fillers | | | | | | |
| Silica | *10 | - | - | - | 5 | - |
| Activated carbon | *11 | - | - | - | - | - |
| Cellulose powder | *12 | - | - | - | - | - |
| Vinylon short fibers | *13 | - | - | - | - | 10 |
| Sodium alginate (0.5% aqueous solution) | | 100 | 100 | 100 | 100 | 100 |
| CEC (meq/100cc) | | 18 | 16 | 10 | 12 | 12 |
| AEC (meq/100cc) | | 8 | 8 | 7 | 5 | 5 |
| Supported ion solution | | | | | | |
| 5% $KNO_3$ | | ○ | ○ | ○ | ○ | ○ |
| 2.5% $KH_2PO_4$ | | ○ | ○ | ○ | ○ | ○ |
| 5% $Ca(NO_3)_2$ | | ○ | ○ | ○ | ○ | ○ |

(continued)

| Plant growing material composition | Example | | | | |
|---|---|---|---|---|---|
| | 20 | 21 | 22 | 23 | 24 |
| Growth of radish | ○ | ○ | ○ | ○ | ○ |

(*1) Artificial zeolite, commercially available from Ecowel Inc. under the trade name of "Ryukyulite 600"
(*2) Bentonite, commercially available from Kasanen Industry Co., Ltd. under the trade name of "Kansai Bentonite"
(*3) Cation exchange resin, commercially available from Organo Corporation under the trade name of "Amberlite IRC-76"
(*4) Reagent-grade hydrotalcite, commercially available from Wako Pure Chemical Industries, Ltd.
(*5) Kaolin clay, commercially available from Showa Chemical Co., Ltd. under the trade name of "NK300"
(*6) Anion exchange resin, commercially available from Organo Corporation under the trade name of "Amberlite IRA-400"
(*7) Foam glass, commercially available from Trim Co., Ltd. under the trade name of "Supersol" (average pore size 60 $\mu$m)
(*8) Porous polyethylene, commercially available from Asahi Kasei Chemicals Corporation under the trade name of "Sunfine AQ"
(*9) Open-cell polyurethane foam, commercially available from AC Chemical Co., Ltd. under the trade name of "AC sponge U"
(*10) Silica, commercially available from Hess Pumice Products, Inc. under the trade name of "NCS-3"
(*11) Reagent-grade activated carbon, commercially available from Wako Pure Chemical Industries, Ltd.
(*12) Cellulose Powder, commercially available from Asahi Kasei Chemicals Corporation under the trade name of "Ceolus"
(*13) Vinylon short fibers, commercially available from Kuraray Co., Ltd. under the trade name of "VF1203-2"
(*14) Reagent-grade Sodium alginate, commercially available from Wako Pure Chemical Industries, Ltd.

**Table 6**

| Plant growing material composition | | Comparative Example | | | | | | |
|---|---|---|---|---|---|---|---|---|
| | | 11 | 12 | 13 | 14 | 15 | 16 | 17 |
| Cation-based fertilizer retainable filler | | | | | | | | |
| Zeolite | *1 | 10 | 10 | 10 | 10 | 1 | 1 | 10 |
| Bentonite | *2 | - | 2 | 2 | 2 | - | - | - |
| Cation exchange resin | *3 | - | - | - | - | - | - | - |
| Anion-based fertilizer retainable filler | | | | | | | | |
| Hydrotalcite | *4 | 10 | 10 | 10 | 10 | 1 | 10 | - |
| Kaolin | *5 | - | - | - | - | - | - | - |
| Anion exchange resin | *6 | - | - | - | - | - | - | - |
| Water retainable filler | | | | | | | | |
| Foam glass | *7 | - | - | - | - | - | - | - |
| Porous polyethylene | *8 | - | - | - | - | - | - | - |
| Polyurethane foam | *9 | - | - | - | - | - | - - | - |
| Other fillers | | | | | | | | |
| Silica | *10 | - | - | - | - | - | - | - |
| Activated carbon | *11 | - | - | - | - | - | - | - |
| Cellulose powder | *12 | - | - | 5 | - | - | - | - |
| Vinylon short fibers | *13 | - | - | - | 5 | 10 | 10 | - |

(continued)

| Plant growing material composition | Comparative Example | | | | | | |
|---|---|---|---|---|---|---|---|
| | 11 | 12 | 13 | 14 | 15 | 16 | 17 |
| Sodium alginate (0.5% aqueous solution) | 100 | 100 | 100 | 100 | 100 | 100 | 100 |
| CEC (meq/100cc) | 11 | 11 | 12 | 11 | 1 | 1 | 12 |
| AEC (meq/100cc) | 6 | 5 | 6 | 5 | 1 | 6 | 0 |
| Supported ion solution | | | | | | | |
| 5% $KNO_3$ | - | - | - | - | ○ | ○ | ○ |
| 2.5% $KH_2PO_4$ | - | - | - | - | ○ | ○ | ○ |
| 5% $Ca(NO_3)_2$ | - | - | - | - | ○ | ○ | ○ |
| Growth of radish | X | X | X | X | Δ | Δ | Δ |

(*1) Artificial zeolite, commercially available from Ecowel Inc. under the trade name of "Ryukyulite 600" (*2) Bentonite, commercially available from Kasanen Industry Co., Ltd. under the trade name of "Kansai Bentonite" (*3) Cation exchange resin, commercially available from Organo Corporation under the trade name of "Amberlite IRC-76" (*4) Reagent-grade hydrotalcite, commercially available from Wako Pure Chemical Industries, Ltd.

(*5) Kaolin clay, commercially available from Showa Chemical Co., Ltd. under the trade name of "NK300" (*6) Anion exchange resin, commercially available from Organo Corporation under the trade name of "Amberlite IRA-400" (*7) Foam glass, commercially available from Trim Co., Ltd. under the trade name of "Supersol" (average pore size 60 μm)

(*8) Porous polyethylene, commercially available from Asahi Kasei Chemicals Corporation under the trade name of "Sunfine AQ" (*9) Open-cell polyurethane foam, commercially available from AC Chemical Co., Ltd. under the trade name of "AC sponge U" (*10) Silica, commercially available from Hess Pumice Products, Inc. under the trade name of "NCS-3" (*11) Reagent-grade activated carbon, commercially available from Wako Pure Chemical Industries, Ltd.

(*12) Cellulose Powder, commercially available from Asahi Kasei Chemicals Corporation under the trade name of "Ceolus" (*13) Vinylon short fibers, commercially available from Kuraray Co., Ltd. under the trade name of "VF1203-2" (*14) Reagent-grade Sodium alginate, commercially available from Wako Pure Chemical Industries, Ltd.

Table 7

| Plant growing material composition | | Comparative Example | | | | | |
|---|---|---|---|---|---|---|---|
| | | 18 | 19 | 20 | 21 | 22 | 23 |
| Cation fertilizer retainable filler | | | | | | | |
| Zeolite | *1 | 20 | - | - | - | - | - |
| Bentonite | *2 | - | - | - | - | - | - |
| Cation exchange resin | *3 | - | 2 | - | - | - | - |
| Anion fertilizer retainable filler | | | | | | | |
| Hydrotalcite | *4 | - | - | 20 | - | - | - |
| Kaolin | *5 | - | - | - | - | - | - |
| Anion exchange resin | *6 | - | - | - | - | - | - |
| Water retainable filler | | | | | | | |
| Foam glass | *7 | - | - | - | - | - | - |

(continued)

| Plant growing material composition | | Comparative Example | | | | | |
|---|---|---|---|---|---|---|---|
| | | 18 | 19 | 20 | 21 | 22 | 23 |
| Porous polyethylene | *8 | - | - | - | - | - | - |
| Polyurethane foam | *9 | - | - | - | - | - | - |
| Other fillers | | | | | | | |
| Silica | *10 | - | - | - | 20 | - | - |
| Activated carbon | *11 | - | - | - | - | 20 | - |
| Cellulose powder | *12 | - | - | - | - | - | 20 |
| Vinylon short fibers | *13 | - | - | - | - | - | - |
| Sodium alginate (0.5% aqueous solution) | | 100 | 100 | 100 | 100 | 100 | 100 |
| CEC (meq/100cc) | | 17 | 18 | 1 | 2 | 2 | 0 |
| AEC (meq/100cc) | | 1 | 1 | 10 | 0 | 2 | 0 |
| Supported ion solution | | | | | | | |
| 5% $KNO_3$ | | ○ | ○ | ○ | ○ | ○ | ○ |
| 2.5% $KH_2PO_4$ | | ○ | ○ | ○ | ○ | ○ | ○ |
| 5% $Ca(NO_3)_2$ | | ○ | ○ | ○ | ○ | ○ | ○ |
| Growth of radish | | Δ | x | x | x | x | x |
| (*1) Artificial zeolite, commercially available from Ecowel Inc. under the trade name of "Ryukyulite 600" <br> (*2) Bentonite, commercially available from Kasanen Industry Co., Ltd. under the trade name of "Kansai Bentonite" <br> (*3) Cation exchange resin, commercially available from Organo Corporation under the trade name of "Amberlite IRC-76" <br> (*4) Reagent-grade hydrotalcite, commercially available from Wako Pure Chemical Industries, Ltd. <br> (*5) Kaolin clay, commercially available from Showa Chemical Co., Ltd. under the trade name of "NK300" <br> (*6) Anion exchange resin, commercially available from Organo Corporation under the trade name of "Amberlite IRA-400" <br> (*7) Foam glass, commercially available from Trim Co., Ltd. under the trade name of "Supersol" (average pore size 60 μm) <br> (*8) Porous polyethylene, commercially available from Asahi Kasei Chemicals Corporation under the trade name of "Sunfine AQ" <br> (*9) Open-cell polyurethane foam, commercially available from AC Chemical Co., Ltd. under the trade name of "AC sponge U" <br> (*10) Silica, commercially available from Hess Pumice Products, Inc. under the trade name of "NCS-3" <br> (*11) Reagent-grade activated carbon, commercially available from Wako Pure Chemical Industries, Ltd. <br> (*12) Cellulose Powder, commercially available from Asahi Kasei Chemicals Corporation under the trade name of "Ceolus" <br> (*13) Vinylon short fibers, commercially available from Kuraray Co., Ltd. under the trade name of "VF1203-2" <br> (*14) Reagent-grade Sodium alginate, commercially available from Wako Pure Chemical Industries, Ltd. | | | | | | | |

[Cation-based or anion-based fertilizer component supported artificial soils]

(Example 25)

As a cation adsorbent, 10g of zeolite (cation exchangeable) was added to 0.5% by mass of sodium alginate solution, and agitated for 3 minutes with a mixer for household purposes ("SM-L57" available from SANYO Electric Co., Ltd.) to prepare a liquid mixture. The mixture was gradually added drop-wise to 5% by mass calcium chloride aqueous solution as a multivalent metal ion aqueous solution at a dropping speed of one drop per a second with a measuring pipette. After the gelation of the drops into granulated materials, the gelled granulated materials were collected. The gel granulated materials were immersed in 5% by mass $KNO_3$ aqueous solution for 6 hours with gradually agitating to conduct ion exchanging, and then washed with water and dried at 55°C in an oven for 24 hours. A particle size of the dried granulated materials is adjusted with a mesh screen such that the granulated materials remained over 2 mm mesh and passed through (under) 4 mm mesh to prepare an artificial soil containing potassium ($K^+$).

With respect to the resulting artificial soil, the total amount of released fertilizer of the adsorbed ion was measured by the method described later.

(Examples 26 to 35)

The artificial soils were prepared by treating as described in Example 25, except that the ion adsorbents, optionally the other fillers, alginates, crosslinking agents and supported fertilizer components used were replaced with those shown in Table 8 and Table 9. With respect to the resulting artificial soils, the total amount of released fertilizer of the adsorbed ion was measured as described in Example 25. The results are shown in Table 8 and Table 9.

(Comparative Examples 24 to 29)

In Comparative Examples 24 to 29, the ion adsorption treatment was conducted as described in Example 25, except that the ingredients shown in Table 10 and Table 11 were used. In Comparative Examples 24 to 29, the ion adsorption treatment was conducted as described in Example 25 by using the other fillers (kaolin cray, silica, sand, foam glass) without the ion adsorbent of the present invention. In Comparative Examples 24 to 29, the total amount of released fertilizer was measured as described in Example 25, and the results are shown in Table 10 and Table 11.

(Comparative Example 30)

In Comparative Example 30, culture soil, commercially available from Hanagokoro Co., Ltd. under the trade name of "Hana-chan Baiyodo" was used. The total amount of released fertilizer was measured as described in Example 25, and the result is shown in Table 11.

(Comparative Examples 31 to 32)

In Comparative Examples 31 to 32, the sand and fertilizer, which the fertilizer shown in Table 11 was mixed with 100cc of the sand, were used. The total amount of released fertilizer was measured as described in Example 25, and the result is shown in Table 11.

**Table 8**

|  |  | Example | | | | | |
|---|---|---|---|---|---|---|---|
|  |  | 25 | 26 | 27 | 28 | 29 | 30 |
| Ion adsorbent |  |  |  |  |  |  |  |
| Zeolite | *1 | 10 | 10 | 10 | 10 | 10 | - |
| Bentonite | *2 | - | - | - | - | - | 10 |
| Cation exchange resin | *3 | - | - | - | - | - | - |
| Hydrotalcite | *4 | - | - | - | - | - | - |
| Anion exchange resin | *5 | - | - | - | - | - | - |
| Other fillers |  |  |  |  |  |  |  |
| Kaolin cray | *6 | - | - | - | - | - | - |
| Silica | *7 | - | - | - | - | - | - |
| Sand | *8 | - | - | - | - | - | - |
| Foam glass | *9 | - | - | - | - | - | - |
| Fertilizer-1 | *10 | - | - | - | - | - | - |
| Fertilizer-2 | *11 | - | - | - | - | - | - |
| Alginate |  |  |  |  |  |  |  |

(continued)

| | | Example | | | | | |
|---|---|---|---|---|---|---|---|
| | | 25 | 26 | 27 | 28 | 29 | 30 |
| Sodium alginate | *12 | 100 | 100 | 100 | - | - | 100 |
| Potassium alginate | *13 | - | - | - | 100 | - | - |
| Ammonium alginate | *14 | - | - | - | - | 100 | - |
| Crosslinking agent (5% solution) | | $CaCl_2$ | $CaCl_2$ | $CaCl_2$ | $CaCl_2$ | $CaCl_2$ | $CaCl_2$ |
| Supported fertilizer component | | | | | | | |
| N component | | - | - | - | - | - | - |
| P component | | - | - | - | - | - | - |
| K component | | $KNO_3$ | - | - | $KNO_3$ | $KNO_3$ | $KNO_3$ |
| Ca component | | - | $CaCl_2$ | - | - | - | - |
| Mg component | | - | - | $MgSO_4$ | - | - | - |
| Total amount of released fertilizer (meq/L) | | | | | | | |
| N component | | - | - | - | - | - | - |
| P component | | - | - | - | - | - | - |
| K component | | 98 | - | - | 103 | 90 | 108 |
| Ca component | | - | 54 | - | - | - | - |
| Mg component | | - | - | 57 | - | - | - |
| Supported ion type (alone) | | K | Ca | Mg | K | K | K |

(*1) Artificial zeolite, commercially available from Ecowel Inc. under the trade name of "Ryukyulite 600" (*2) Bentonite, commercially available from Kasanen Industry Co., Ltd. under the trade name of "Kansai Bentonite" (*3) Cation exchange resin, commercially available from Organo Corporation under the trade name of "Amberlite IRC-76" (*4) Reagent-grade hydrotalcite, commercially available from Wako Pure Chemical Industries, Ltd..

(*5) Anion exchange resin, commercially available from Organo Corporation under the trade name of "Amberlite IRA-400J" (*6) Kaolin clay, commercially available from Showa Chemical Co., Ltd. under the trade name of "NK300" (*7) Silica, commercially available from Hess Pumice Products, Inc..

(*8) Sand; standard sand commercially available (*9) Foam glass, commercially available from Trim Co., Ltd. under the trade name of "Supersol" (average pore size 60 $\mu$m)

(*10) Fertilizer-1, commercially available from Hyponex Co., Ltd. under the trade name of "Magamp K" (*11) Fertilizer-2: Magnesia lime, commercially available from Kohnan Shoji Co., Ltd.

(*12) Reagent-grade Sodium alginate, commercially available from Wako Pure Chemical Industries, Ltd.

(*13) Potassium alginate, commercially available from Kimika Corporation under the trade name of "Kimika Algin K-3" (*14) Ammonium alginate, commercially available from Kimika Corporation under the trade name of "Kimika Algin NH-3"

**Table 9**

| | | Example | | | | |
|---|---|---|---|---|---|---|
| | | 31 | 32 | 33 | 34 | 35 |
| Ion adsorbent | | | | | | |
| Zeolite | *1 | - | - | - | - | - |
| Bentonite | *2 | - | - | - | - | - |

(continued)

|  |  | Example | | | | |
|---|---|---|---|---|---|---|
|  |  | 31 | 32 | 33 | 34 | 35 |
| Cation exchange resin | *3 | 2 | - | - | - | - |
| Hydrotalcite | *4 | - | - | 10 | 10 | 10 |
| Anion exchange resin | *5 | - | 2 | - | - | - |
| Other fillers |  |  |  |  |  |  |
| Kaolin cray | *6 | - | - | - | - | - |
| Silica | *7 | - | - | - | - | - |
| Sand | *8 | - | - | - | - | - |
| Foam glass | *9 | - | - | - | - | - |
| Fertilizer-1 | *10 | - | - | - | - | - |
| Fertilizer-2 | *11 | - | - | - | - | - |
| Alginate |  |  |  |  |  |  |
| Sodium alginate | *12 | 100 | 100 | 100 | 100 | 100 |
| Potassium alginate | *13 | - | - | - | - | - |
| Ammonium alginate | *14 | - | - | - | - | - |
| Crosslinking agent (5% solution) |  | $CaCl_2$ | $CaCl_2$ | $CaCl_2$ | $Ca(NO_3)_2$ | $CaCl_2$ |
| Supported fertilizer component |  |  |  |  |  |  |
| N component |  | - | $KNO_3$ | $KNO_3$ | $KNO_3$ | - |
| P component |  | - | - | - | - | $KH_2PO_4$ |
| K component |  | $KNO_3$ | - | - | - | - |
| Ca component |  | - | - | - | - | - |
| Mg component |  | - | - | - | - | - |
| Total amount of released fertilizer (meq/L) |  |  |  |  |  |  |
| N component |  | - | 88 | 62 | 74 | - |
| P component |  | - | - | - | - | 61 |
| K component |  | 92 | - | - | - | - |
| Ca component |  | - | - | - | - | - |
| Mg component |  | - | - | - | - | - |

(continued)

| | Example | | | | |
|---|---|---|---|---|---|
| | 31 | 32 | 33 | 34 | 35 |
| Supported ion type (alone) | K | N | N | N | P |

(*1) Artificial zeolite, commercially available from Ecowel Inc. under the trade name of "Ryukyulite 600"
(*2) Bentonite, commercially available from Kasanen Industry Co., Ltd. under the trade name of "Kansai Bentonite"
(*3) Cation exchange resin, commercially available from Organo Corporation under the trade name of "Amberlite IRC-76"
(*4) Reagent-grade hydrotalcite, commercially available from Wako Pure Chemical Industries, Ltd..
(*5) Anion exchange resin, commercially available from Organo Corporation under the trade name of "Amberlite IRA-400J"
(*6) Kaolin clay, commercially available from Showa Chemical Co., Ltd. under the trade name of "NK300"
(*7) Silica, commercially available from Hess Pumice Products, Inc..
(*8) Sand; standard sand commercially available
(*9) Foam glass, commercially available from Trim Co., Ltd. under the trade name of "Supersol" (average pore size 60 $\mu$m)
(*10) Fertilizer-1, commercially available from Hyponex Co., Ltd. under the trade name of "Magamp K"
(*11) Fertilizer-2: Magnesia lime, commercially available from Kohnan Shoji Co., Ltd.
(*12) Reagent-grade Sodium alginate, commercially available from Wako Pure Chemical Industries, Ltd.
(*13) Potassium alginate, commercially available from Kimika Corporation under the trade name of "Kimika Algin K-3"
(*14) Ammonium alginate, commercially available from Kimika Corporation under the trade name of "Kimika Algin NH-3"

**Table 10**

| | | Comparative Example | | | | |
|---|---|---|---|---|---|---|
| | | 24 | 25 | 26 | 27 | 28 |
| Ion adsorbent | | | | | | |
| Zeolite | *1 | - | - | - | - | - |
| Bentonite | *2 | - | - | - | - | - |
| Cation exchange resin | *3 | - | - | - | - | - |
| Hydrotalcite | *4 | - | - | - | - | - |
| Anion exchange resin | *5 | - | - | - | - | - |
| Other fillers | | | | | | |
| Kaolin cray | *6 | 10 | 10 | - | - | - |
| Silica | *7 | - | - | 10 | - | - |
| Sand | *8 | - | - | - | 10 | - |
| Foam glass | *9 | - | - | - | - | 10 |
| Fertilizer-1 | *10 | - | - | - | - | - |
| Fertilizer-2 | *11 | - | - | - | - | - |
| Alginate | | | | | | |
| Sodium alginate | *12 | 100 | 100 | 100 | 100 | 100 |
| Potassium alginate | *13 | - | - | - | - | - |
| Ammonium alginate | *14 | - | - | - | - | - |
| Crosslinking agent (5% solution) | | CaCl$_2$ | CaCl$_2$ | CaCl$_2$ | CaCl$_2$ | CaCl$_2$ |
| Supported fertilizer component | | | | | | |

(continued)

|  | Comparative Example | | | | |
|---|---|---|---|---|---|
|  | 24 | 25 | 26 | 27 | 28 |
| N component | - | - | - | - | - |
| P component | - | - | - | - | - |
| K component | $KNO_3$ | - | $KNO_3$ | $KNO_3$ | $KNO_3$ |
| Ca component | - | $CaCl_2$ | - | - | - |
| Mg component | - | - | - | - | - |
| Total amount of released fertilizer (meq/L) | | | | | |
| N component | - | - | - | - | - |
| P component | - | - | - | - | - |
| K component | 16 | - | 20 | 8 | 13 |
| Ca component | - | 22 | - | - | - |
| Mg component | - | - | - | - | - |
| Supported ion type (alone) | - | - | - | - | - |

(*1) Artificial zeolite, commercially available from Ecowel Inc. under the trade name of "Ryukyulite 600" (*2) Bentonite, commercially available from Kasanen Industry Co., Ltd. under the trade name of "Kansai Bentonite" (*3) Cation exchange resin, commercially available from Organo Corporation under the trade name of "Amberlite IRC-76" (*4) Reagent-grade hydrotalcite, commercially available from Wako Pure Chemical Industries, Ltd..

(*5) Anion exchange resin, commercially available from Organo Corporation under the trade name of "Amberlite IRA-400J" (*6) Kaolin clay, commercially available from Showa Chemical Co., Ltd. under the trade name of "NK300" (*7) Silica, commercially available from Hess Pumice Products, Inc..

(*8) Sand; standard sand commercially available (*9) Foam glass, commercially available from Trim Co., Ltd. under the trade name of "Supersol" (average pore size 60 $\mu$m)

(*10) Fertilizer-1, commercially available from Hyponex Co., Ltd. under the trade name of "Magamp K" (*11) Fertilizer-2: Magnesia lime, commercially available from Kohnan Shoji Co., Ltd.

(*12) Reagent-grade Sodium alginate, commercially available from Wako Pure Chemical Industries, Ltd.

(*13) Potassium alginate, commercially available from Kimika Corporation under the trade name of "Kimika Algin K-3" (*14) Ammonium alginate, commercially available from Kimika Corporation under the trade name of "Kimika Algin NH-3"

**Table 11**

|  |  | Comparative Example | | | |
|---|---|---|---|---|---|
|  |  | 29 | 30 | 31 | 32 |
| Ion adsorbent | | | | | |
| Zeolite | *1 | - | - | - | - |
| Bentonite | *2 | - | - | - | - |
| Cation exchange resin | *3 | - | - | - | - |
| Hydrotalcite | *4 | - | - | - | - |
| Anion exchange resin | *5 | - | - | - | - |
| Other fillers | | | | | |
| Kaolin cray | *6 | - | - | - | - |

(continued)

|  |  | Comparative Example | | | |
|---|---|---|---|---|---|
|  |  | 29 | 30 | 31 | 32 |
| Silica | *7 | - | - | - | - |
| Sand | *8 | - | - | 100 | 100 |
| Foam glass | *9 | 10 | - | - | - |
| Fertilizer-1 | *10 | - | - | 0.5 | - |
| Fertilizer-2 | *11 | - | - | - | 0.2 |
| Alginate | | | | | |
| Sodium alginate | *12 | 100 | - | - | - |
| Potassium alginate | *13 | - | - | - | - |
| Ammonium alginate | *14 | - | - | - | - |
| Crosslinking agent (5% solution) | | $CaCl_2$ | - | - | - |
| Supported fertilizer component | | | | | |
| N component | | - | - | - | - |
| P component | | - | - | - | - |
| K component | | - | - | - | - |
| Ca component | | - | - | - | - |
| Mg component | | $MgSO_4$ | - | - | - |
| Total amount of released fertilizer (meq/L) | | | | | |
| N component | | - | 15 | - | - |
| P component | | - | - | 9 | - |
| K component | | - | 97 | 9 | - |
| Ca component | | - | 108 | - | 13 |
| Mg component | | 4 | - | 16 | 7 |
| Supported ion type | | | N,K,Ca etc. | N,K,P etc. | N,K,P etc. |

(*1) Artificial zeolite, commercially available from Ecowel Inc. under the trade name of "Ryukyulite 600"
(*2) Bentonite, commercially available from Kasanen Industry Co., Ltd. under the trade name of "Kansai Bentonite"
(*3) Cation exchange resin, commercially available from Organo Corporation under the trade name of "Amberlite IRC-76"
(*4) Reagent-grade hydrotalcite, commercially available from Wako Pure Chemical Industries, Ltd..
(*5) Anion exchange resin, commercially available from Organo Corporation under the trade name of "Amberlite IRA-400J"
(*6) Kaolin clay, commercially available from Showa Chemical Co., Ltd. under the trade name of "NK300"
(*7) Silica, commercially available from Hess Pumice Products, Inc..
(*8) Sand; standard sand commercially available
(*9) Foam glass, commercially available from Trim Co., Ltd. under the trade name of "Supersol" (average pore size 60 μm)
(*10) Fertilizer-1, commercially available from Hyponex Co., Ltd. under the trade name of "Magamp K"
(*11) Fertilizer-2: Magnesia lime, commercially available from Kohnan Shoji Co., Ltd.
(*12) Reagent-grade Sodium alginate, commercially available from Wako Pure Chemical Industries, Ltd.
(*13) Potassium alginate, commercially available from Kimika Corporation under the trade name of "Kimika Algin K-3"
(*14) Ammonium alginate, commercially available from Kimika Corporation under the trade name of "Kimika Algin NH-3"

*(Test method)*

(1) Cation exchange capacity

The extract of the each granulated plant growing material was prepared with an extraction unit "CEC-10 Ver.2" manufactured by Fujihira Co., Ltd. and was used as a sample for the measurement of the cation exchange capacity. The cation exchange capacity of each granulated plant growing material was measured by using a soil and plant analyzer "SFP-3" manufactured by Fujihira Co., Ltd.

(2) Anion exchange capacity

To 2g of a sample, 20 mL of 0.05M calcium nitrate solution was added, and mixed by agitation for 1 hour. The mixture was centrifuged at room temperature and 10,000 rpm for 1 minute, and the supernatant was separated. The concentration of calcium nitrate in the supernatant was determined by measuring an absorbance at a wavelength of 410 nm. The adsorption amount of nitrate nitrogen per weight of the sample was calculated from the difference between the concentration of the resulting calcium nitrate and that of the 0.05M calcium nitrate solution, and the anion exchange capacity (AEC) per volume of the sample was determined by converting with the specific gravity value.

(3) Water retaining capacity at pF of 1.7 to 2.7

A vessel, in which water is not pooled in the bottom thereof, was prepared by making holes for drainage in the bottom of a 500 mL cup of polyethylene and paving the bottom of the vessel with sand having a particle size of 2 to 5 mm. The granulated plant growing material of 500 mL, which absorbed water until the state of saturating a capillary with water, was filled in the vessel as a sample such that the granulated plant growing material retains its shape. A pF meter was put in the porous particulates or granulated plant growing materials filled therein and fixed, and then the pF values and volume water content every 24 hours of the sample were measured. The moisture retention curve was obtained by plotting the capillary force as the water retaining capacity and the volume water content, and the water retaining capacity was determined from the volume water content within the range of the capillary force corresponding to the pF of 1.7 to 2.7. The measuring methods of the pF value and volume water content are as follows.

(a) pF value

The pF value was measured with a pF meter (tensiometer), commercially available from Daiki Rika Kogyo Co., Ltd. under the trade name of "DIK-8343".

(b) Volume water content (VWC)

The volume water content was determined by calculation from the following formula:

$$\text{VWC }(\%) = \frac{(Wp - Wd)}{100} \times 100$$

Wd: Dry mass of the plant growing material
Wp: Mass of the plant growing material when measuring the pF value.

(4) Gaseous phase ratio

The value of the volume water content at pF of 1.5 was read from the fertilizer retaining capacity curve formed in the above (3), and the sample having the water content value was prepared. The sample was set in a digital actual volumenometer, commercially available from Daiki Rika Kogyo Co., Ltd. under the trade name of "DIK-1150" to automatically measure a gaseous phase ratio at pF of 1.5. The value of the gaseous phase ratio is larger, the breathability of the sample is better.

(5) Growth of radish

(i) Growth of radish 1

A vessel, which water is not pooled in the bottom thereof, was prepared by making holes for drainage in the bottom of a 300 mL cup of polyethylene and paving the bottom of the vessel with sand having a particle size of 2 to 5 mm. The granulated plant growing material or artificial soil of 200 mL as a sample was put on the sand. One seed of radish (Red king) was planted to germinate it by giving sufficient water. Thereafter, 30 mL of a 500 fold dilution of "Hyponica liquid fertilizer (two - pack type)" available from Kyowa Co., Ltd. was supplied thereto every 5 days and 30 mL of tap-water was supplied every day. The growth of radish is evaluated by the following evaluation criteria for a sample number of 3 (N = 3).

Evaluation criteria

[0099]

　　○: Good growth; Reaves and fruits were grown as with the case of outdoor cultivation.
　　Δ: Slow growth; The true leaves and fruits thereof were not grown.
　　x: Poor growth; The radish was withered.

(ii) Growth of radish 2

The growth of radish is evaluated for a sample number of 3 (N = 3) as described in the above "Growth of radish 1", except that the tap-water was not supplied.

(6) Total amount of released adsorbed ions in artificial soil

The artificial soil was filled in a measuring cylinder with shaking to weigh 100cc of the artificial soil. The artificial soil was filled in a chromatographic-tube, and then 100cc of deionized water was gradually poured therein. After the deionized water flowed down, the pouring of 100cc of deionized water was repeated 50 times. Thereafter, 100cc of citric acid was gradually poured therein to extract adsorbed ions in the artificial soil. The extract was filtered with a C3 filter paper, and the amount of the extracted ions in the filtrate was measured. The extracting with citric acid was also repeated 50 times to measure the total amount of extracted adsorbed ions.

(Test results)

### Table 12

|  | Examples | | | | | | |
|---|---|---|---|---|---|---|---|
|  | 1 | 2 | 3 | 4 | 5 | 6 | 7 |
| Particle size (mm) | 2-4 | 2-4 | 2-4 | 2-4 | 2-4 | 2-4 | 2-4 |
| Cation exchange capacity CEC (meq/100mL) | 14 | 18 | 21 | 11 | 13 | 11 | 12 |
| Anion exchange capacity AEC (meq/100mL) | 15 | 11 | 10 | 21 | 24 | 11 | 11 |
| Gaseous phase ratio (%) | 51 | 53 | 56 | 54 | 55 | 52 | 52 |
| Water retaining capacity at pF of 1.7 to 2.7 (mL/100mL) | 7 | 7 | 6 | 8 | 7 | 16 | 15 |
| Growth of radish 1 | ○ | ○ | ○ | ○ | ○ | ○ | ○ |
| Growth of radish 2 | Δ | Δ | Δ | Δ | Δ | ○ | ○ |

**Table 13**

|  | Examples | | | | | | |
|---|---|---|---|---|---|---|---|
|  | 8 | 9 | 10 | 11 | 12 | 13 | 14 |
| Particle size (mm) | 2-4 | 2-4 | 2-4 | 2-4 | 2-4 | 2-4 | 2-4 |
| Cation exchange capacity CEC (meq/100mL) | 11 | 12 | 12 | 11 | 11 | 11 | 21 |
| Anion exchange capacity AEC (meq/100mL) | 13 | 14 | 11 | 12 | 12 | 12 | 20 |
| Gaseous phase ratio (%) | 51 | 51 | 52 | 53 | 56 | 58 | 58 |
| Water retaining capacity at pF of 1.7 to 2.7 (mL/100mL) | 18 | 9 | 16 | 16 | 14 | 8 | 7 |
| Growth of radish 1 | ○ | ○ | ○ | ○ | ○ | ○ | ○ |
| Growth of radish 2 | ○ | Δ | ○ | ○ | ○ | Δ | Δ |

**Table 14**

|  | Comparative Examples | | | | |
|---|---|---|---|---|---|
|  | 1 | 2 | 3 | 4 | 5 |
| Particle size (mm) | 2-4 | 8-10 | 2-4 | 8-10 | 0.075-0.106 |
| Cation exchange capacity CEC (meq/100mL) | 19 | 10 | 3 | 4 | 24 |
| Anion exchange capacity AEC (meq/100mL) | 3 | 3 | 21 | 11 | 22 |
| Gaseous phase ratio (%) | 50 | 50 | 52 | 52 | 28 |
| Water retaining capacity at pF of 1.7 to 2.7 (mL/100mL) | 7 | 3 | 9 | 2 | 36 |
| Growth of radish 1 | Δ | Δ | Δ | Δ | Δ |
| Growth of radish 2 | Δ | x | Δ | x | x |

**Table 15**

|  | Comparative Examples | | | | |
|---|---|---|---|---|---|
|  | 6 | 7 | 8 | 9 | 10 |
| Particle size (mm) | - 0.075 | 2-4 | 2-4 | 2-4 | 2-4 |
| Cation exchange capacity CEC (meq/100mL) | 28 | 4 | 8 | 4 | 4 |
| Anion exchange capacity AEC (meq/100mL) | 25 | 9 | 3 | 2 | 3 |
| Gaseous phase ratio (%) | 19 | 55 | 58 | 60 | 59 |
| Water retaining capacity at pF of 1.7 to 2.7 (mL/100mL) | 32 | 6 | 8 | 18 | 22 |
| Growth of radish 1 | Δ | Δ | Δ | Δ | Δ |
| Growth of radish 2 | x | Δ | Δ | Δ | Δ |

(Granulated plant growing material for artificial soil)

As is apparent from the results shown in Table 12 to Table 15, the granulated plant growing materials of the present invention of Examples 1 to 14 have excellent fertilizer retainability by having both of high cation exchange capacity and high anion exchange capacity; high water retaining capacity at pF of 1.7 to 2.7, which the plant can easily absorb; and very excellent growth of radish as compared with Comparative Examples 1 to 10.

Among Examples having more excellent performances than those of Comparative Examples, Examples 6 to 7 using the porous particulates having a continuous pore structure, Example 8 adopting the vacuum freeze drying process as the drying step and Examples 10 to 12 using a hydrophilic surfactant having a HLB value of not less than 10 as a foaming agent have further high water retaining capacity at pF of 1.7 to 2.7 and very excellent growth of radish 2 under the condition such that liquid fertilizer was only supplied every 5 days and tap-water was not supplied. That is, it is possible to reduce the frequency of supplying water by improving the water retaining capacity.

On the other hand, in Comparative Example 1 without using an anion exchange filler, the anion exchange capacity is very low, and the growth of radish is very poor. In Comparative Example 2 which the particle size of the granulated plant growing material is larger than that of Comparative Example 1, the water retaining capacity is reduced because a gap between the granulated plant growing materials is large, and the growth of radish is poorer than Comparative Example 1.

In Comparative Example 3 without using a cation exchange filler, the cation exchange capacity is very low, and the growth of radish is very poor. In Comparative Example 4 which the particle size of the granulated plant growing material is larger than that of Comparative Example 3, the water retaining capacity is reduced because a gap between the granulated plant growing materials is large, and the growth of radish is poorer than Comparative Example 3.

In Comparative Examples 5 to 6 having very small particle size of the granulated plant growing material, it is difficult for the plant to absorb water in the gap by the capillary force because a gap between the granulated plant growing materials is small. Thereby, the drainage capacity thereof is reduced, and the growth of radish is very poor. In Example 4 using only silica as the filler, the anion exchange capacity is very low, and the growth of radish is very poor.

In Comparative Examples 7 to 8 using the kaolin clay powder and silica powder as the other filler without using a cation exchange filler and an anion exchange filler, the cation exchange capacity and anion exchange capacity are very low, and the growth of radish is very poor.

In Comparative Examples 9 to 10 using the porous particulates having a continuous pore structure without using a cation exchange filler and an anion exchange filler, the water retaining capacity is excellent, but the cation exchange capacity and anion exchange capacity are very low, and the growth of radish is poor.

(Artificial soil)

As is apparent from the results shown in Table 5 to Table 7, the artificial soil of the present invention of Examples 15 to 24 has excellent fertilizer retainability by having both of high cation exchange capacity and high anion exchange capacity because a fertilizer component is supported in advance; and very excellent growth of radish by only supplying water as compared with Comparative Examples 11 to 23.

In Comparative Examples 11 to 14 without the fertilizer component supported, the radish does not grow only by supplying water because the fertilizer component is not contained. In Comparative Examples 15 to 20 lacking one of the fertilizers, the growth of radish is poor. In Comparative Examples 21 to 23 without using fertilizer retainable fillers, the radish does not grow as with the state without the fertilizer.

(Cation-based or anion-based fertilizer component supported artificial soil)

As is apparent from the results shown in Table 8 to Table 11, in the cation-based or anion-based fertilizer component supported artificial soil of the present invention of Examples 25 to 35, the amount of retaining only specified cation-based or anion-based fertilizer component (Total amount of released fertilizer) is large as compared with Comparative Examples 24 to 32, and it is possible to supply only the required fertilizer component.

In Comparative Examples 24 to 29 without using the ion adsorbent of the present invention, the amount of retaining the fertilizer component (Total amount of released fertilizer) is small, and it is difficult to use it as a fertilizer. In Comparative Example 30, which is the commercially available culture soil, and Comparative Examples 31 to 32, a plurality of the fertilizer components are already mixed therein, and it is impossible to select the specified fertilizer component.

**INDUSTRIAL APPLICABILITY**

The present invention relates to an artificial soil, which plant can grow only by supplying water, particularly tap-water, and a method of making the artificial soil. The artificial soil cannot be only used for a soil in a planter or a flowerpot, but can be used for soil improvement in broad acres.

The cation-based or anion-based fertilizer component supported artificial soil of the present invention is the artificial soil, which lacked fertilizer component is only supported among the fertilizer components, and it is possible to fertilize only the lacked fertilizer component at a pinpoint.

**Claims**

1. A plant growable artificial soil only by supplying water comprising a granulated material of fertilizer retainable fillers, wherein the granulated material supports a fertilizer component and has a particle size of 0.2 to 6 mm.

2. The artificial soil according to Claim 1, wherein the granulated material is porous and has an adsorption ability of a cation and anion having a cation exchange capacity of not less than 5 meq/100 cc and an anion exchange capacity of not less than 5 meq/100 cc.

3. The artificial soil according to Claim 1 further comprising a granulated material of water retainable fillers, wherein the granulated material of water retainable fillers is porous and has a particle size of 0.2 to 6 mm.

4. A method of making a plant growable artificial soil only by supplying water comprising the steps of:

   granulating fertilizer retainable fillers to form a granulated material having a particle size of 0.2 to 6 mm; and
   supporting a fertilizer component on the granulated material.

5. The method according to Claim 4, wherein the step of granulating is conducted such that the granulated material is porous.

6. The method according to Claim 4 further comprising the steps of:

   granulating water retainable fillers to form a porous granulated material having a particle size of 0.2 to 6 mm; and
   mixing the granulated material of the water retainable fillers with the granulated material of fertilizer retainable fillers.

7. A method of making a plant growable artificial soil only by supplying water comprising the steps of:

   granulating fertilizer retainable fillers and porous water retainable fillers to form a granulated material having a particle size of 0.2 to 6 mm; and
   supporting a fertilizer component on the granulated material.

8. A cation-based fertilizer component supported artificial soil, wherein at least one cation necessary for growth of a plant is adsorbed on a granulated cation adsorbent.

9. The cation-based fertilizer component supported artificial soil according to Claim 8, wherein a plant can easily absorb a cation by plant (root) acids.

10. The cation-based fertilizer component supported artificial soil according to Claim 9, wherein the cation adsorbent is selected from the group consisting of zeolite, smectite, mica, vermiculite, talc, cation exchange resins, humus and mixtures thereof.

11. The cation-based fertilizer component supported artificial soil according to Claim 10, wherein the cation is selected from the group consisting of $K^+$, $Ca^{2+}$, $Mg^{2+}$, $Fe^{2+}$, $Mn^{2+}$, $Zn^{2+}$, $Ni^{2+}$, $Cu^{2+}$, $Mo^{2+}$ and mixtures thereof.

12. The cation-based fertilizer component supported artificial soil according to Claim 11, wherein the cation is $K^+$.

13. An anion-based fertilizer component supported artificial soil, wherein at least one anion necessary for growth of a plant is adsorbed on a granulated anion adsorbent.

14. The anion-based fertilizer component supported artificial soil according to Claim 13, wherein a plant can easily absorb an anion by plant (root) acids.

15. The anion-based fertilizer component supported artificial soil according to Claim 14, wherein the anion adsorbent is selected from the group consisting of double hydroxide and double hydroxides, allophane, imogolite, kaolin, anion exchange resins and mixtures thereof.

16. The anion-based fertilizer component supported artificial soil according to Claim 15, wherein the anion is selected from the group consisting of $NO_3^-$, $PO_4^{3-}$, $SO_4^{2-}$, $Cl^-$ and mixtures thereof.

17. The anion-based fertilizer component supported artificial soil according to Claim 16, wherein the anion is selected from the group consisting of $NO_3^-$, $PO_4^{3-}$ and mixtures thereof.

18. A fertilizer component supported artificial soil comprising the cation-based fertilizer component supported artificial soil according to Claim 1 and the anion-based fertilizer component supported artificial soil according to Claim 13.

19. A granulated plant growing material for an artificial soil formed from alginate gel, wherein the granulated plant growing material has a particle size of 0.2 to 6 mm, a cation exchange capacity of not less than 5 meq/100 mL and an anion exchange capacity of not less than 5 meq/100 mL.

20. The granulated plant growing material according to Claim 19, wherein a water retaining capacity at pF of 1.7 to 2.7 is within the range of 5 to 50 mL per 100 mL of the granulated plant growing material.

21. The granulated plant growing material according to Claim 20, wherein the water retaining capacity is accomplished by the combination with porous particulates having a continuous pore structure.

22. The granulated plant growing material according to Claim 20, wherein the water retainability is accomplished by forming the granulated plant growing material itself into a porous granulated plant growing material.

23. The granulated plant growing material according to Claim 22, wherein the formation of the porous granulated plant growing material is accomplished by vacuum freeze drying when preparing the granulated plant growing material or by formulating a hydrophilic surfactant to give rise to a gelation after foaming when preparing the granulated plant growing material.

24. The granulated plant growing material according to Claim 19 comprising a cation exchange filler and an anion exchange filler.

25. The granulated plant growing material according to Claim 24, wherein the cation exchange filler is selected from the group consisting of zeolite, smectite-based mineral, mica-based mineral, cation exchange resins and humus; and the anion exchange filler is selected from the group consisting of hydrotalcite, manasseite, pyroaurite, sjogrenite, copper rust, allophane, imogolite, kaolin and anion exchange resins.

26. The granulated plant growing material according to Claim 21, wherein the porous particulates having a continuous pore structure are selected from the group consisting of a foam glass and polymer porous medium.

## INTERNATIONAL SEARCH REPORT

| International application No. |
| --- |
| PCT/JP2013/067462 |

### A. CLASSIFICATION OF SUBJECT MATTER
*A01G1/00*(2006.01)i

According to International Patent Classification (IPC) or to both national classification and IPC

### B. FIELDS SEARCHED

Minimum documentation searched (classification system followed by classification symbols)
A01G1/00, C05B1/00-21/00, C05C1/00-13/00, C05D1/00-11/00, C05F1/00-17/02,
C05G1/00-5/00

Documentation searched other than minimum documentation to the extent that such documents are included in the fields searched
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 2002-356393 A (Okutama Kogyo Co., Ltd.), | 1,2,4,5,8-18 |
| A | 13 December 2002 (13.12.2002), paragraphs [0011], [0013], [0017], [0021] to [0023] (Family: none) | 3,6,7,19-26 |
| X | JP 5-176643 A (Shigeru MASUDA), | 1,3-12 |
| A | 20 July 1993 (20.07.1993), paragraphs [0019] to [0020] (Family: none) | 2,13-26 |
| A | JP 2-79910 A (Midori NINAKI), 20 March 1990 (20.03.1990), entire text; all drawings & US 5106405 A     & NL 8902339 A | 1-26 |

| ☒ Further documents are listed in the continuation of Box C. | ☐ See patent family annex. |

| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 19 July, 2013 (19.07.13) | 30 July, 2013 (30.07.13) |

| Name and mailing address of the ISA/ Japanese Patent Office | Authorized officer |
| --- | --- |
| Facsimile No. | Telephone No. |

Form PCT/ISA/210 (second sheet) (July 2009)

**INTERNATIONAL SEARCH REPORT**

| International application No. |
| --- |
| PCT/JP2013/067462 |

C (Continuation).    DOCUMENTS CONSIDERED TO BE RELEVANT

| Category* | Citation of document, with indication, where appropriate, of the relevant passages | Relevant to claim No. |
| --- | --- | --- |
| A | JP 62-79714 A  (Taro OZAWA),<br>13 April 1987 (13.04.1987),<br>entire text; all drawings<br>(Family: none) | 1-26 |
| A | JP 3-290112 A  (Kenji NAKAMURA),<br>19 December 1991 (19.12.1991),<br>entire text; all drawings<br>(Family: none) | 1-26 |
| A | JP 2011-57461 A  (Shinto Co., Ltd.),<br>24 March 2011 (24.03.2011),<br>entire text; all drawings<br>(Family: none) | 1-26 |

Form PCT/ISA/210 (continuation of second sheet) (July 2009)

**INTERNATIONAL SEARCH REPORT**

International application No.

PCT/JP2013/067462

**Box No. II        Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III        Observations where unity of invention is lacking (Continuation of item 3 of first sheet)**

This International Searching Authority found multiple inventions in this international application, as follows:
Document 1 (JP 2002-356393 A  (Okutama Kogyo Co., Ltd.), 13 December 2002 (13.12.2002), paragraphs [0011], [0013], [0017], [0021] to [0023] (Family: none)) describes the feature of using, as a culture medium, particles which have a particle diameter of 0.3-10 mm and onto which a fertilizer has been adsorbed, the particles containing a cation adsorbent that has a cation-exchange capacity of 50 meq/100 g or higher, such as a zeolite, and an anion adsorbent that has an anion-exchange capacity of 20 meq/100 g or higher, such as an anion-exchange resin.
(Continued to extra sheet)

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**        ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

**INTERNATIONAL SEARCH REPORT**

International application No.

PCT/JP2013/067462

<u>Continuation of Box No.III of continuation of first sheet(2)</u>

The zeolite is porous and adsorbs potassium ions, and the anion-exchange resin adsorbs nitric acid ions, etc.

Document 2 (JP 5-176643 A  (Shigeru MASUDA), 20 July 1993 (20.07.1993), paragraphs [0019] to [0020] (Family: none)) describes a mixture of a particulate zeolite having a particle diameter of 0.6-3.0 mm and calcined diatomaceous earth and also includes a statement to the effect that the calcined diatomaceous earth has water retentivity.

Therefore, the inventions of claims 1-18 cannot be considered to be novel in the light of the invention disclosed in the document 1 or 2, and have no special technical feature.

Consequently, the following two inventions (invention groups) are involved in claims.

Meanwhile, the inventions of claims 1-18 having no special technical feature are classified into invention 1.

(Invention 1) claims 1-18: The inventions having no special technical feature (the inventions disclosed in the document 1 or 2)

(Invention 2) Claims 19-26: An artificial soil which has the configuration specified in claim 19

Form PCT/ISA/210 (extra sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6209662 A
- JP 2002080284 A
- JP 11070384 A
- JP 2006 A
- JP 169064 A